# EUROPEAN PATENT APPLICATION

(11) **EP 1 329 417 A1**
(43) Date of publication of application: **23.07.2003**
(21) Application number: 01972486.3
(22) Date of filing: 26.09.2001
(51) Int. Cl.: C01B 3/32, C01B 3/48, H01M 8/06

(54) **HYDROGEN FORMING DEVICE**

(30) Priority: 27.09.2000 JP 2000293802; 13.11.2000 JP 2000345254; 18.12.2000 JP 2000383347
(71) Applicant: MATSUSHITA ELECTRIC INDUSTRIAL CO., LTD., Kadoma-shi, Osaka 571-8501 (JP)
(72) Inventor: UKAI, Kunihiro, Ikoma-shi, Nara 630-0213 (JP); TAGUCHI, Kiyoshi, Tsurumi-ku, Osaka 538-0052 (JP); TOMIZAWA, Takeshi, Ikoma-shi, Nara 630-0123 (JP); YOSHIDA, Yutaka, Nabari-shi, Mie 518-0746 (JP); FUJIWARA, Seiji, Osaka-shi, Osaka 532-0022 (JP)
(74) Representative: Grünecker, Kinkeldey, Stockmair & Schwanhäusser Anwaltssozietät
(86) International application number: JP0108345
(87) International publication number: WO02026620

(57) **Abstract**

Since carbon monoxide is generated as subcomponent in a water vapor reforming reaction, in many cases, a shifter for conducting a shift reaction on water and carbon monoxide is used in combination. Generally, in the case of a stable operation, a concentration of carbon monoxide hardly increases. However, when using conditions of a catalyst are changed due to external factors in the shifter, a concentration of carbon monoxide increases.

A device includes a reformer 1 containing carbon monoxide and water vapor, and a shifter 3 having a shift catalyst body 3a, and the device supplies hydrogen gas to the shifter from a gas supply part 1. In the above device, carbon monoxide concentration detection means 6 is provided at an exit of hydrogen gas of the shifter.

When a concentration of carbon monoxide that is detected by the carbon monoxide concentration detection means is larger than a set value, a quantity of water vapor is increased in the gas supply part 1.

## Description

### Technical Field

The present invention relates to a hydrogen generating apparatus and so on for generating hydrogen gas by reforming water and a hydrocarbon component used as a raw material.

### Background Art

As a distributed power generator for effectively using energy, a cogeneration system using a fuel cell with high efficiency of power generation has received attention.

Among them, a fuel cell such as a polymer electrolyte fuel cell generates electricity by using hydrogen as fuel. Since a fuel infrastructure for hydrogen is not currently developed, hydrogen needs to be generated on a place of installation. Therefore, as a method for generating hydrogen, a water vapor reforming method and an auto thermal method have been used, in which raw materials including natural gas, a hydrocarbon component such as LPG, alcohol such as methanol, or a naphtha component are caused to react with water in a reformer containing a reforming catalyst so as to generate hydrogen.

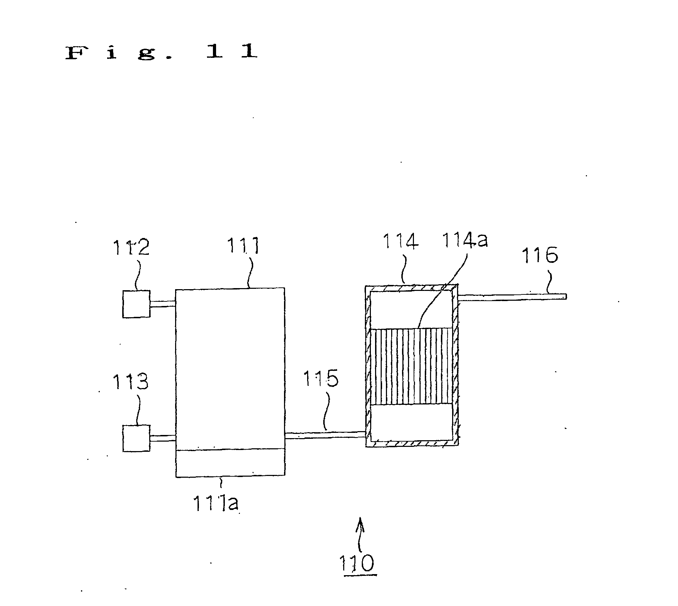

As a first conventional art, Figure 11 shows a structural diagram of a hydrogen generating apparatus 110 according to a conventional art. In Figure 11, a reformer 111 is means of generating hydrogen gas by receiving supply of materials and water from a material supply part 112 and a water supply part 113, a reform heating part 111a is means of heating the reformer 111, a shifter 114 is means which includes a shift catalyst 114a and cause hydrogen gas to react by using the shift catalyst 114a, a gas passage 115 is means of connecting the reformer 111 and the shifter 114, and a gas passage 116 is means of supplying hydrogen gas to a purifying part (not shown) from the shifter 114.

In a reforming reaction of water and materials in such a hydrogen generating apparatus, carbon monoxide is generated as subcomponent. Particularly in a polymer electrolyte fuel cell which operates at a low temperature, since carbon monoxide is a component poisoning a fuel cell electrode catalyst, a shifter, which conducts shift reaction on water and carbon monoxide to obtain hydrogen and carbon dioxide, and a purifying part, which conducts oxidization or methanation on carbon monoxide, are used in combination. However, the purifying part is omitted in the configuration of Figure 11.

In the shifter 114, a Fe-Cr catalyst and a Cu-Zn catalyst are used as a shift catalyst, and carbon monoxide is reduced in concentration to about 0.5%. Further, the purifying part is configured such that a Pt or Ru catalyst, which is a Pt noblemetal, is used to selectively conducting oxidization or methanation on carbon monoxide, and carbon monoxide is finally reduced to about 20 ppm.

As a second conventional art, regarding many fuel cells used for a fuel-cell cogeneration system, for example, a phosphate fuel cell which has been put into practical use and a solid polymer electrolyte fuel cell which has been developed, electricity is generated using hydrogen as fuel. However, since an infrastructure for hydrogen has not been developed, hydrogen needs to be generated on a place of installing the system.

A water vapor reforming method is available as a method for generating hydrogen. In this method, hydrocarbon materials such as natural gas, LPG, naphtha, gasoline, and kerosene, and alcohol materials such as methanol are mixed with water, or a water vapor reforming reaction is carried out on a reformer containing a reforming catalyst so as to generate hydrogen.

Carbon monoxide is generated as subcomponent in the above water vapor reforming reaction. Since carbon monoxide degrades a fuel cell electrode catalyst, particularly in a solid polymer electrolyte fuel cell, a shifter, which conducts shift reaction on water and carbon monoxide to obtain hydrogen and carbon dioxide, and a purifying part, which causes carbon monoxide to undergo a selective oxidation reaction through oxidizing gas (normally air) , are used in combination in many cases .

Since the catalysts in the reacting parts are different in reaction temperature, it is necessary to control the catalysts at the reaction temperatures to supply hydrogen with stability. The catalysts effectively act at about 700°C in the reformer, at 200 to 500°C in the shifter, and at 100 to 250°C in the purifying part. Therefore, a method is necessary for controlling the catalyst temperatures within the above range.

Further, on starting, since the reformer positioned in upstream of the hydrogen generating apparatus has a high temperature, the following configuration is adopted in many cases: the shifter and the purifying part are heated and started by heat from the reformer, for example, latent heat held by hydrogen gas or excessive heat of a heating part placed on the reformer.

However, in the conventional heating method for sequentially heating the shifter and purifying part by heat of hydrogen gas from the reformer, it takes a long time until a catalyst temperature of the purifying part, which is placed at the lowest stream, rises to a reaction temperature. For example, in the case of home use where starting and stopping are frequently conducted, it has been desired to minimize starting time to increase overall efficiency.

Further, in a steady state of the device a selective oxidation reaction of carbon monoxide and oxidizing gas (normally air) proceeds when the purifying part has a temperature of about 100°C or higher. Since the selective oxidation reaction is an exothermic reaction, a quantity of heat generated by heating becomes larger than that of heat radiation as the reaction proceeds. As a result, in some cases, the purifying part continues to rise in temperature. Thus, a temperature of the purifying part has been controlled by cooling means such as a cooling fan and cooling water. However, when the reacting conditions are changed by variations in load and the like so as to largely reduce a quantity of heat, supercooling finally occurs. Hence, in some cases, carbon monoxide is not reduced in the purifying part.

As a third conventional art, a fuel cell such as a polymer electrolyte fuel cell, which is used in a cogeneration system using a fuel cell, generates electricity by using hydrogen as fuel. Since a fuel infrastructure for hydrogen is not currently developed, hydrogen needs to be generated on a place of installation. Therefore, as a method for generating hydrogen, a water vapor reforming method and an auto thermal method have been used, in which raw materials including natural gas, a hydrocarbon component such as LPG, alcohol such as methanol, or a naphtha component are caused to react with water in a reformer containing a reforming catalyst to generate hydrogen.

In the reforming reaction for generating hydrogen from water and raw materials, carbon monoxide is generated as subcomponent. Particularly in a polymer electrolyte fuel cell which operates at a low temperature, carbon monoxide is a component poisoning a fuel cell electrode catalyst. Thus, a shifter, which conducts shift reaction on water and carbon monoxide to obtain hydrogen and carbon dioxide, and a purifying part, which conducts oxidization or methanation on carbon monoxide, are used in combination in a hydrogen generating apparatus for the polymer electrolyte fuel cell. In the shifter, a Fe-Cr catalyst and a Cu-Zn catalyst are used and are reduced to a concentration of about 0.5%. Moreover, in the purifying part, a Pt or Ru catalyst, which is a Pt noble metal, is used to selectively conducting oxidization or methanation on carbon monoxide, and carbon monoxide is finally reduced to about 20 ppm.

Incidentally, as the first conventional art, in the hydrogen generating apparatus shown in Figure 11, in order to effectively reduce carbon monoxide in the purifying part, it is necessary to reduce carbon monoxide in the shifter 114 with stability to obtain a stable concentration of carbon monoxide.

At this moment, a concentration of carbon monoxide can be stabilized by conducting an operation with fixed operating conditions such as a quantity of supplied gas flow and fixed conditions of using the catalysts in the shifter 114.

However, in this method, a quantity of gas flow is fixed regardless of whether an actual concentration of carbon monoxide is stable or unstable. Hence, it is difficult to vary a quantity of supplied gas flow according to a quantity of electricity generated in the fuel cell. Further, it is not possible to respond to the case where a concentration of carbon monoxide increases due to a factor such as an external environment of the device in spite of the same operating conditions.

Besides, the following method is also applicable:
based on the initial properties of the shift catalyst, after a concentration of carbon monoxide is previously determined by analogy according to the operating
conditions such as a temperature of the catalyst and a quantity of supplied water vapor, the hydrogen generating apparatus is operated. However, in this method, it is not possible to respond to the case where a concentration of carbon monoxide increases at the exit of the shifter in spite of the same operating conditions, for example, in the case where catalytic activity is decreased by an intermitted operation, in which starting and stopping are repeated.

As described above, as a first problem, it has been difficult to stabilize a concentration of carbon monoxide in the shifter to effectively reduce a concentration of carbon monoxide in the purifying part of the conventional hydrogen generating apparatus.

Next, in the hydrogen generating apparatus of the above described second conventional art, it is necessary to quickly increase temperatures of the parts to predetermined temperatures in order to generate hydrogen with stability. However, in the conventional hydrogen generating apparatus, since the purifying part is disposed at the lowest stream of the hydrogen generating apparatus, heat of hydrogen gas is not likely to be transferred. Further, since the purifying part has a purifying catalyst with a large thermal capacity, it takes a long time until a temperature rises to a temperature allowing the activity of the purifying catalyst, resulting in a long time for heating the purifying catalyst to an optimum reaction temperature, that is, long starting time.

Therefore, particularly regarding the device for home use where starting and stopping are frequently conducted, a primary obj ect of the operation of the device is to shorten starting time.

Moreover, normally when a raw material of hydrocarbon or alcohol is subjected to water vapor reforming, since somewhat water is excessively supplied to prevent carbon deposition, gas discharged from the reformer contains some water vapor.

On starting, a temperature of the purifying part does not reach a dew point or higher of hydrogen gas. Thus, the catalytic activity may decrease because water vapor in hydrogen gas condenses when the hydrogen gas passes through the purifying part, the water vapor is collected on the catalyst, and the carried catalyst is exfoliated.

It is assumed that starting and stopping of the device are frequently carried out in a fuel cell with a small quantity of electricity (e.g., for home use) . Hence, in some cases, when starting and stopping are frequently carried out, since water condenses each time, the catalytic activity further decreases and a concentration of carbon monoxide gradually increases in gas at the exit of the purifying part in an extended period of use.

Particularly for use as a hydrogen generating apparatus for supplying hydrogen to a solid polymer electrolyte fuel cell, increased carbon monoxide causes large degradation in power generating characteristics. Hence, a solution has been necessary for preventing the increase.

Furthermore, in a steady state, when a load is changed by reducing supplied raw material gas and so on, a quantity of carbon monoxide is reduced in hydrogen gas supplied to the purifying part. Hence, a quantity of heat is reduced by a reaction in the purifying part. As a result, even when the cooling means is stopped, a temperature decreases because a reduction in quantity of heat cannot be responded, and a selective oxidation reaction of carbon monoxide is less likely to occur in the purifying part, resulting in an increase in concentration of carbon monoxide in gas at the exit of the purifying part.

Also, Japanese Patent Laid-Open No. 10-324501 discloses a method for using a combustor to heat a purifying part, in which a selective oxidation reaction proceeds. In this method, it is difficult to immediately respond to variations in temperature that is caused by a change in reacting conditions such as variations in load. Further, the configuration such as piping for combustion gas becomes complicated and the control thereof also becomes complicated, resulting in various problems including a larger size of the device, a larger number of components, and higher cost. Additionally, the entire disclosure of the above described Japanese Patent Laid-Open No. 10-324501 is incorporated herein by reference (consultation) in its entirety.

Next, as to the hydrogen generating apparatus as the above third technique, the polymer electrolyte fuel cell used for a cogeneration system is characterized by starting at a low temperature. Therefore, it is possible to shorten time between starting and power generation. Hence, as to the hydrogen generating apparatus as well, it has been desired to immediately supply hydrogen gas to the fuel cell after starting.

Since hydrogen gas needs to be supplied after a concentration of carbon monoxide is sufficiently reduced, for example, as discussed in the technique of Japanese Patent Laid-Open No. 2000-154002, in many cases, a concentration of carbon monoxide in hydrogen gas is measured, and gas is supplied to the fuel cell from the hydrogen generating apparatus according to the value. The concentration of carbon monoxide can be measured by a sensor and the like using infrared ray absorption. The sensor is used to confirm a sufficient reduction in concentration, and then, hydrogen gas is supplied to the fuel cell. Thus, it is possible to prevent a fuel cell electrode catalyst from being poisoned with carbon monoxide. Besides, the entire disclosure of the above described Japanese Patent Laid-Open No. 2000-154002 is incorporated herein by reference (consultation) in its entirety.

However, in order to reduce carbon monoxide with stability, the shifting and purifying parts need to start in proper conditions. Particularly on starting of the hydrogen generating apparatus, the conditions of using the catalysts are likely to be unstable because the catalysts of the reformer, the shifter, and the purifying part are heated sequentially from normal temperature to operating temperatures. A reduced concentration of carbon monoxide may change largely.

Consequently, as a third problem, when hydrogen gas is supplied to the fuel cell only according to a concentration of carbon monoxide that is measured by a carbon monoxide concentration sensor, it may be difficult to supply hydrogen gas with stability, or the fuel battery electrode catalyst may be poisoned with carbon monoxide.

### Disclosure of the Invention

The present invention is devised to solve the above described first problem and to provide a hydrogen generating apparatus being capable of supplying hydrogen with stability while reducing carbon monoxide with stability in a shifter.

The present invention is devised to solve the above described second problem and has as its object the provision of a hydrogen generating apparatus which can quickly increase a temperature of a purifying part with a simple configuration and simple control, shorten starting time, maintain catalytic reactivity, and stabilize a concentration of carbon monoxide in gas at an exit of the purifying part.

The present invention is devised to solve the above described third problem and has as its object the provision of a hydrogen generating apparatus being capable of supplying hydrogen with a low concentration carbon monoxide in a stable manner.

To achieve the above object, the 1st invention of the present invention (corresponding to claim 1) is a hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means,
said supply amount control means conducts control such that said supply amount of said raw material is reduced in said hydrogen gas supply part,
amounts of said supplied raw material and water are reduced in said hydrogen gas supply part, or
said supply amount of said water is increased in said hydrogen gas supply part.

The 2nd invention of the present invention (corresponding to claim 2) is a hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
carbon monoxide concentration detection means which receives supply of gas being subjected to said shift conversion from said shifter, and detects a concentration of carbon monoxide in gas being subjected to said shift, and
supply amount control means of controlling said supply amount of said raw material and/or said water for said hydrogen gas supply part,
wherein when said concentration of carbon monoxide exceeds a predetermined value, said concentration being detected by said carbon monoxide concentration detection means, and when a temperature of said shift catalyst body is within a predetermined value range, said temperature being detected by said temperature detection means,
said supply amount control means conducts control such that a supply amount of said raw material is reduced in said hydrogen gas supply part,
amounts of said supplied raw material and water are reduced in said hydrogen gas supply part, or
said supply amount of said water is increased in said hydrogen gas supply part.

The 3rd invention of the present invention (corresponding to claim 3) is a hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer, and
carbon monoxide concentration detection means which receives supply of gas being subjected to said shift conversion from said shifter, and detects a concentration of carbon monoxide in gas being subjected to said shift conversion,
wherein when a concentration of carbon monoxide exceeds a predetermined value, said concentration being detected by said carbon monoxide concentration detection means, and when said temperature detected by said temperature detection means is outside a predetermined value range,
said temperature adjustment means controls a temperature of said gas.

The 4th invention of the present invention (corresponding to claim 4) is a hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means, and when said temperature detected by said temperature detection means is outside a predetermined value range,
said temperature adjustment means controls said temperature of said gas,
when said concentration of carbon monoxide exceeds a predetermined value, said concentration being detected by said carbon monoxide concentration detection means, and when said temperature of said shift catalyst body is within a predetermined value range, said temperature being detected by said temperature detection means,
said supply amount control means conducts control such that said supply amount of said raw material is reduced in said hydrogen gas supply part,
amounts of said supplied raw material and water are reduced in said hydrogen gas supply part, or
said supply amount of said water is increased in said hydrogen gas supply part.

The 5th invention of the present invention (corresponding to claim 5) is the hydrogen gas generating device according to the 3rd or 4th invention of the present invention, wherein when said concentration of carbon monoxide exceeds a predetermined value, said concentration being detected by said carbon monoxide concentration detection means, and when said temperature of said shift catalyst body is below a predetermined value range, said temperature being detected by said temperature detection means,
said temperature adjustment means increases a temperature of said gas.

The 6th invention of the present invention (corresponding to claim 6) is the hydrogen gas generating device according to the 3rd or 4th invention of the present invention, wherein when said concentration of carbon monoxide exceeds a predetermined value, said concentration being detected by said carbon monoxide concentration detection means, and when said temperature of said shift catalyst body is higher than a predetermined value range, said temperature being detected by said temperature detection means,
said temperature adjustment means reduces said temperature of said gas.

At this moment, in the first to sixth present inventions , regarding a concentration of carbon monoxide that is detected by the carbon monoxide concentration detection means, a predetermined value is determined according to the concentration of carbon monoxide that is allowable in the shifter. As an example of a specific value, 0.8% or 5000 ppm is desirable.

Further, in the first to sixth present inventions, regarding a temperature detected by the temperature detection means, a predetermined value range is determined in association with the relationship between a temperature of the shift catalyst body and a concentration of the carbon monoxide. As an example of a specific value, a value range of an upper limit temperature of 280°C and a lower limit value of 100°C is desirable.

The 7th invention of the present invention (corresponding to claim 7) is a hydrogen generating apparatus comprising a gas supply part for supplying hydrogen gas containing at least hydrogen and carbon monoxide,
a purifying part having a purify catalyst body for causing said carbon monoxide to react, and
heating means of heating hydrogen gas supplied to said purifying part and/or said purifying part.

The 8th invention of the present invention (corresponding to claim 8) is the hydrogen generating apparatus according to the 7th invention of the present invention, further comprising a temperature detection part provided on said purifying part, and
control means of controlling at least said heating means,
wherein said control means conducts control such that said heating means is operated on starting of said apparatus and a temperature detected by said temperature detection part is set at a predetermined temperature or higher.

At this moment, it is desirable to set a predetermined temperature of the eighth present invention at a temperature associated with condensing of water vapor in the purifying part. As an example of a specific temperature, about 140°C is desirable.

The 9th invention of the present invention (corresponding to claim 9) is the hydrogen generating apparatus according to the 8th invention of the present invention, further comprising cooling means of cooling hydrogen gas supplied to said purifying part and/or said purifying part,
wherein said control means controls said heating means and said cooling means such that said temperature detected by said temperature detection part is within a predetermined temperature range after starting of said apparatus.

At this moment, regarding a predetermined temperature range of the ninth present invention, it is desirable to set a lower limit at a temperature associated with condensing of water vapor in the purifying part. As an example of a specific temperature, about 140°C is desirable. Further, it is desirable to set an upper limit of the temperature range at an upper limit temperature of the purify catalyst body being capable of effectively reducing carbon monoxide in the purifying part. As a specific example, about 230°C is desirable.

The 10th invention of the present invention (corresponding to claim 10) is the hydrogen generating apparatus according to the 7th invention of the present invention, wherein a PTC heater is used as said heating means.

The 11th invention of the present invention (corresponding to claim 11) is a hydrogen generating apparatus comprising a hydrogen gas supply part which receives supply of a raw material and water and generates hydrogen gas containing at least carbon monoxide and water vapor,
a shifter which receives supply of hydrogen gas from said hydrogen gas supply part and has a shift catalyst body,
a purifying part which receives supply of said hydrogen gas from said shifter and has a purify catalyst body,
a purifying temperature detection part for detecting a temperature of said purify catalyst body,
carbon monoxide concentration detection means of detecting a concentration of said carbon monoxide in said shifter and/or said purifying part, and
control means of controlling a supply amount of hydrogen gas from said purifying part,
wherein on starting, when said concentration of carbon monoxide is lower than a predetermined value on starting, said concentration being detected by said carbon monoxide concentration detection means, and when a temperature detected by said purifying temperature detection means is higher than a predetermined value,
said control means starts supply of hydrogen gas from said purifying part.

At this moment, as for a predetermined value regarding a detected concentration in the carbon monoxide concentration detection means of the eleventh present invention, it is desirable to set a value determined in association with the concentration of carbon monoxide that is allowable in hydrogen gas in the shifter and/or the purifying part. As an example of a specific value, 5000 ppm is desirable.

Besides, as for a predetermined value regarding a detected temperature in the purifying temperature detection means of the eleventh present invention, it is desirable to set a value determined at least by the relationship between the detected temperature and the carbon monoxide. As an example of a specific value, a temperature from 100 to 250°C is desirable.

The 12th invention of the present invention (corresponding to claim 12) is the hydrogen generating apparatus according to the 11th invention, wherein said purifying temperature detection part detects a gas temperature after leaving said purify catalyst body as a temperature of said purify catalyst body.

The 13th invention of the present invention (corresponding to claim 13) is a fuel cell apparatus comprising a hydrogen generating apparatus according to any one of claims 1 to 12, and
a fuel cell power generating part which is operated by receiving supply of hydrogen gas from said hydrogen generating apparatus.

The 14th invention of the present invention (corresponding to claim 14) is a program for causing a computer to function as the whole or a part of supply amount control means of controlling said supply amount of said supplied raw material and/or water for said hydrogen gas supply part in a hydrogen generating apparatus according to the 1st invention of the present invention.

The 15th invention of the present invention (corresponding to claim 15) is a program for causing a computer to function as the whole or a part of supply amount control means of controlling said supply amount of said raw material and/or water for said hydrogen gas supply part in a hydrogen generating apparatus according to the 2nd invention of the present invention.

The 16th invention of the present invention (corresponding to claim 16) is a program for causing a computer to function as the whole or a part of temperature adjustment means of adjusting said temperature of hydrogen gas supplied to said shifter from said reformer in a hydrogen generating apparatus according to the 3rd invention of the present invention.

The 17th invention of the present invention (corresponding to claim 17) is a program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to the 4th invention of the present invention.

The 18th invention of the present invention (corresponding to claim 18) is a program for causing a computer to function as the whole or a part of control means of controlling at least said heating means in a hydrogen generating apparatus according to claim 8.

The 19th invention of the present invention (corresponding to claim 19) is a program for causing a computer to function as the whole or a part of control means of controlling said amount of hydrogen gas supplied from said purifying part in a hydrogen generating apparatus according to the 11th invention of the present invention.

The 20th invention of the present invention (corresponding t claim 20) is a medium for carrying a program for causing a computer to function as the whole or a part of supply amount control means of controlling said supply amount of said raw material and/or water for said hydrogen gas supply part in a hydrogen generating apparatus according to the 1st invention of the present invention, said medium being processed by said computer.

The 21st invention of the present invention (corresponding to claim 21) is a medium for carrying a program for causing a computer to function as the whole or a part of supply amount control means of controlling said supply amount of said raw material and/or said water for said hydrogen gas supply part in a hydrogen generating apparatus according to the 2nd invention of the present invention, said medium being processed by said computer.

The 22nd invention of the present invention (corresponding to claim 22) is a medium for carrying a program for causing a computer to function as the whole or a part of temperature adjustment means of adjusting said temperature of hydrogen gas supplied to said shifter from said reformer in a hydrogen generating apparatus according to the 3rd invention, said medium being processed by said computer.

The 23rd invention of the present invention (corresponding to claim 23) is a medium for carrying a program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to the 4th invention of the present invention, said medium being processed by said computer.

The24th invention of the present invention (corresponding to claim 24) is a medium for carrying a program for causing a computer to function as the whole or a part of control means of controlling at least said heating means in a hydrogen generating apparatus according to the 8th invention of the present invention, said medium being processed by said computer.

The 25th invention of the present invention (corresponding to claim 25) is a medium for carrying a program for causing a computer to function as the whole or a part of control means of controlling an amount of hydrogen gas supplied from said purifying part in a hydrogen generating apparatus according to the 11th invention of the present invention, said medium being processed by said computer.

### Brief Description of the Drawings

Figure 1 is a longitudinal sectional view showing a main part of a hydrogen generating apparatus according to Embodiment 1 of the present invention;
Figure 2 is a diagram showing properties of a shift catalyst using Pt and Ce oxide in the present invention;
Figure 3 is a longitudinal sectional view showing a main part of a hydrogen generating apparatus according to Embodiment 2 of the present invention;
Figure 4 is a structural diagram showing the hydrogen generating apparatus according to Embodiment 1 of the present invention;
Figure 5 is a structural diagram showing the hydrogen generating apparatus according to Embodiment 2 of the present invention;
Figure 6 is a structural diagram showing a hydrogen generating apparatus according to Embodiment 3 of the present invention;
Figure 7 is a structural diagram showing a hydrogen generating apparatus according to Embodiment 4 of the present invention;
Figure 8 is a structural diagram showing the hydrogen generating apparatus according to Embodiment 1 of the present invention;
Figure 9 is a diagram showing an example of measurements on concentrations of carbon monoxide after passage through a shifter and after passage through a purifying part and temperature in the purifying part after starting of the hydrogen generating apparatus according to the present invention;
Figure 10 is a structural diagram showing the hydrogen generating apparatus according to Embodiment 2 of the present invention; and
Figure 11 is a longitudinal sectional view showing a main part of a hydrogen generating apparatus according to conventional art.

### Description of the Symbols

- 1: reformer
- 2: heating part
- 3: shifter
- 3a: shift catalyst body
- 4: raw material supply part
- 5: water supply part
- 6: carbon monoxide concentration detection part
- 7: gas passage
- 8: temperature detection part
- 9: gas temperature adjustment part
- 10: supply amount control part
- 41: reformer
- 42: raw material supply part
- 43: water supply part
- 44: reforming heating part
- 45: shifter
- 46: purifying part
- 47a, 47b: electric heater (heating means)
- 48: temperature detection part
- 410: cooling fan (cooling means)
- 81: reformer
- 82: shifter
- 83: purifying part
- 83a: purify catalyst body
- 84: gas passage
- 85: air supply part
- 86: shifting carbon monoxide concentration detection part
- 87: purifying temperature detection part
- 88: shifting carbon monoxide concentration detection part
- 89: control means

### Best Mode for Carrying out the Invention

Embodiments of the present invention will be discussed below in accordance with the accompanied drawings.

### (Embodiment 1)

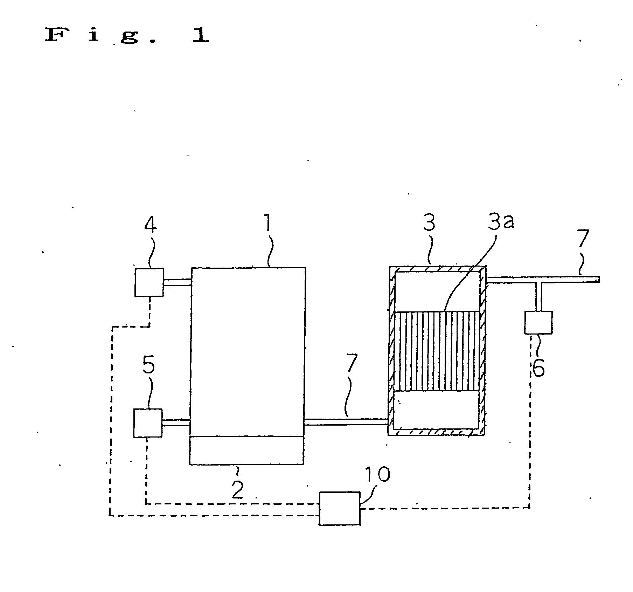

Figure 1 is a longitudinal sectional view showing a main part of the present embodiment regarding a hydrogen generating apparatus of the present invention. In Figure 1, reference numeral 1 denotes a reformer which corresponds to a hydrogen gas supply part of the present invention and has a reforming catalyst of a water vapor reforming reaction. As the reforming catalyst body, a precious metal carried on an alumina substrate is used (purchased from N.E. CHEMCAT CORPORATION). Reference numeral 2 denotes a heating part of the reformer. A burner is used as heatingmeans in this configuration. Reference numeral 3 denotes a shifter which stores a shift catalyst body 3a. As the shift catalyst body 3a, a catalyst is used which is composed of Pt and Ce oxide and is carried on a cordierite honeycomb. Reference numeral 4 denotes a raw material supply part having hydrocarbon for a water vapor reforming reaction as a main component. Reference numeral 5 denotes a water supply part. Reference numeral 7 denotes a gas passage constituted by the reformer 1 and the shifter 3 . Gas is supplied in order of the reformer 1 and the shifter 3, and an exit is provided on the shifter 3. Reference numeral 6 denotes a carbon monoxide concentration detection part provided on the gas passage 7 at the exit of the shifter 3. Here, the detection part measures a concentration of gas leaving the shifter 3 by using infrared ray absorption characteristics of carbon monoxide. Further, reference numeral 10 denotes a supply amount control part which corresponds to supply amount control means of the present invention and controls amounts of supplied raw materials and water that are supplied to the reformer 1 from the raw material supplying part 4 and the water supply part 5. The control is conducted based on a concentration detected by the carbon monoxide concentration detecting part 6.

Regarding the hydrogen generating apparatus of the present embodiment, the following will describe an operation of the device when hydrogen is supplied. According to this description, an embodiment of a controlling method will be discussed as to the hydrogen generating apparatus of the present invention.

First, the reforming heating part 2 is operated to heat the reforming catalyst 1a of the reformer 1 to a temperature of 700 to 750°C. Besides, although the present embodiment uses a burner as the reforming heater 2, the present invention is not limited to the burner. The specific configuration is not limited as long as heating means can obtain a desired heating temperature.

Subsequently, under control of the supply amount control part 10, a hydrocarbon component used as a raw material is supplied from the raw material supply part 4, and water is supplied to the heated reforming catalyst from the water supply part 5, so that a water vapor reforming reaction proceeds. Gas leaving the reformer 1 passes through the shifter 3 via the gas passage 7.

In the shifter 3, carbon monoxide and water vapor in gas leaving the reformer 1 is subjected to a shift reaction to obtain carbon dioxide and hydrogen by the reforming catalyst 3a. A concentration of carbon monoxide in the shifted gas is measured by the carbon monoxide concentration detection part 6, which is provided on the gas passage 7 at the exit of the shifter 3.

In the shifter 3, carbon monoxide and water are reacted with each other to reduce carbon monoxide. Therefore, carbon monoxide can be reduced by increasing water supplied to the reformer 1 and increasing a quantity of water vapor supplied to the shifter 3.

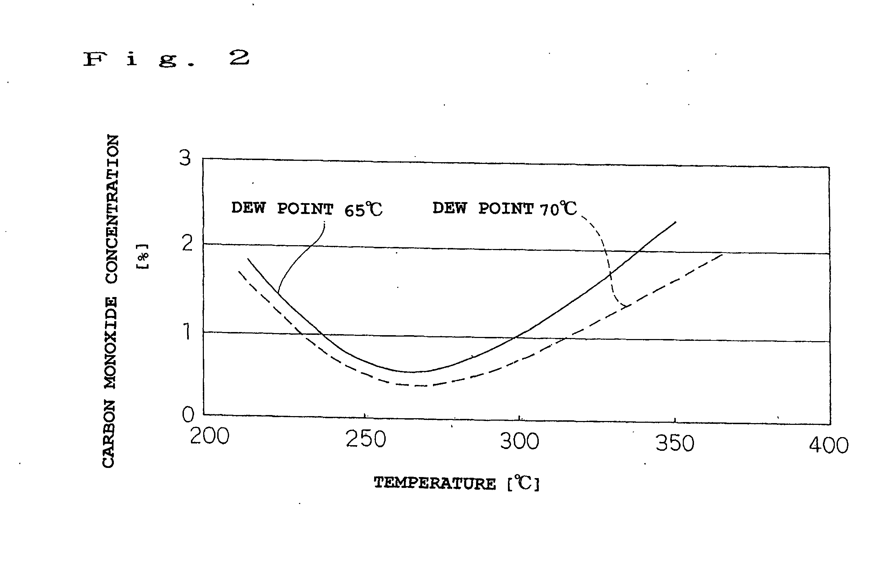

Figure 2 shows the catalytic properties of the catalyst which is produced by preparing Pt and Ce oxide. Figure 2a shows the relationship between a catalyst temperature and a concentration of carbon monoxide when gas containing 10% of carbon monoxide, 10% of carbon dioxide, and 80% of hydrogen is adjusted at a dew point of 65°C and a dew point of 70°C, and ventilation is conducted on the catalyst. As shown in Figure 2a, due to a higher dew point, that is, an increased quantity of water vapor, reaction equilibrium of carbon monoxide and water is shifted, so that carbon monoxide in hydrogen gas can be reduced.

Additionally, although the catalytic properties shown in Figure 2 are different in catalyst service condition including a quantity of the catalyst, a kind of the catalyst, and a quantity of supplied gas flow, any problem does not occur on the idea of the reaction equilibrium of carbon monoxide and water.

Thus, in the present embodiment, in order to reduce carbon monoxide with stability, based on the measurement results and so on shown in Figure 2, an upper limit value is set in advance regarding a detected concentration of carbon monoxide in the carbon monoxide concentration detection part 6. When a detected concentration of carbon monoxide exceeds the set value, the supply amount control part 10 conducts control so as to increase a quantity of water supplied to the reformer 1 from the water supply part 5.

Therefore, even when a concentration of carbon monoxide increases after the processing of the shifter 3, it is possible to readily reduce carbon monoxide in hydrogen gas. Particularly, in any state of the shift catalyst body 3a, reaction equilibrium is shifted by increasing a quantity of supplied water so as to reduce carbon monoxide. Hence, it is possible to respond to a momentary increase in carbon monoxide by conducting control combined with the carbon monoxide concentration detection part 6.

Besides, when a reduction in concentration of carbon monoxide cannot be detected, that is, carbon monoxide is not reduced in spite of an increase in supply amount of water from the water supply part 5, the supply amount control part 10 may conduct control so as to reduce supply of a raw material, which has hydrocarbon as a main component, from the material supply part 4. When the supply amount of the raw material is reduced, a ratio of water is larger relative to the raw material, thereby obtaining the same effect as the operation for increasing a supply amount of water.

Furthermore, the supply amount control part 10 may conduct control so as to reduce the supply of water from the water supply part 5 in addition to a reduction in raw material from the raw material supply section 4. In this case, a quantity of gas flow passing through the shift catalyst body 3a is reduced, and a quantity of the catalyst is increased relative to a shift reaction of carbon monoxide and water. Thus, it is possible to reduce a concentration of carbon monoxide.

Additionally, according to the configuration of the device, a kind of the shift catalyst, using conditions of shifted gas, and so on, it is necessary to optimize an upper limit value of carbon monoxide and operating conditions such as a supply amount of water.

For example, when hydrogen gas is supplied to a solid polymer electrolyte fuel cell, depending upon the operating conditions of the solid polymer electrolyte fuel cell and the configuration of the catalyst, it is desirable that the supply amount be 10000 ppm or less, at least 5000 ppm or less to generate electricity with stability. Therefore, it is desirable that the carbon monoxide concentration detection part 6 has a set value of about 5000 ppm in view of the operating conditions.

### (Embodiment 2)

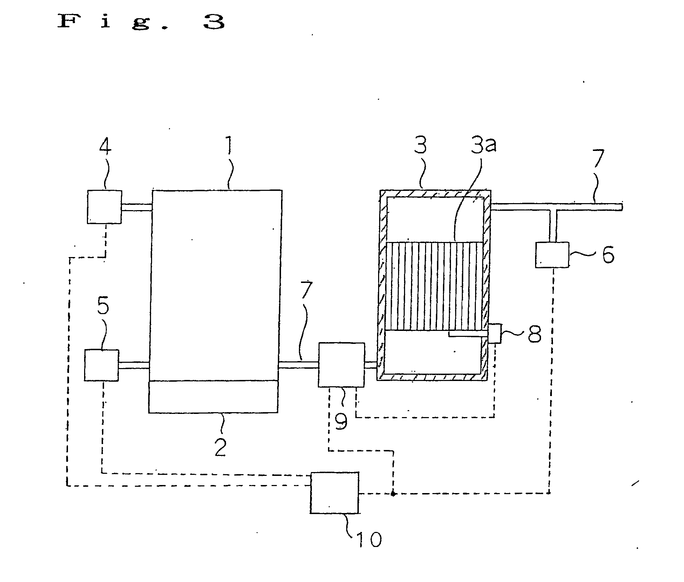

Figure 3 is a longitudinal sectional view showing a main part of a hydrogen generating apparatus according to Embodiment 2 of the present invention. The present embodiment is substantially identical in configuration to Embodiment 1 shown in Figure 1. The explanation of the same part will be omitted and only the difference will be discussed. The present embodiment is different in that a shifter 3 has a temperature measurement part 8 for detecting a temperature of a shift catalyst body 3a, a gas temperature adjustment part 9 is provided on a gas passage 7 between a reformer 1 and the shifter 3, and a supply amount control part 10 conducts a controlling operation as well based on a temperature detected by the gas temperature adjustment part 9. Here, the gas temperature adjustment part 9 is configured such that an electric heater for heating gas and an air-cooling fan for cooling are combined with each other. Besides, the temperature measurement part 8 corresponds to temperature detection means of the present invention, and the gas temperature adjustment part 9 corresponds to temperature detecting means of the present invention.

The operation of the hydrogen generating apparatus according to the above described embodiment is substantially the same as Embodiment 1. In the shifter 3, carbonmonoxide is reduced, which is mixed with hydrogen gas produced in the reformer 1.

The present embodiment is different from Embodiment 1 in that in the gas temperature adjustment part 9, upper limit and lower limit values are provided as predetermined values for comparison with a measured temperature of the shifted catalyst body of the temperature measurement part 8, when a concentration of carbon monoxide in shifted gas that is measured in a carbon monoxide concentration detecting part 6 is larger than the upper limit value, which is equal to that of Embodiment 1, and when a measured temperature of the shift catalyst body exceeds the upper limit, the gas temperature adjustment part 9 is operated to lower a temperature of the shift catalyst body 3a, and when a concentration of carbon monoxide in shifted gas that is measured in the carbon monoxide concentration detecting part 6 is larger than the upper limit value, which is equal to that of Embodiment 1, and when a measured temperature of the shift catalyst body is lower than the lower limit value, the gas temperature adjustment part 9 is operated to raise a temperature of the shift catalyst body 3a.

A reduction and increase in temperature of a shift catalyst are causes of increased carbon monoxide in hydrogen gas after shift conversion in the shifter 3. A concentration of carbon monoxide after the catalyst is shifted, depends upon a catalyst temperature of the shifted catalyst more than the relationship between humidity and a concentration of carbon monoxide of Figure 2. As the catalyst temperature increases, a concentration of carbon monoxide decreases. It is found that from a predetermined temperature (about 260 to 265°C), a concentration of carbon monoxide increases with a catalyst temperature.

The shift conversion of carbon monoxide and water is an exothermic reaction (about 41.2kJ/COmol). Thus, as the catalyst temperature rises, a concentration of carbon monoxide increases.

Meanwhile, in the case of a low catalyst temperature, since a reacting speed is reduced, a concentration of carbon monoxide increases.

Thus, in the present embodiment, measurements are made on variations in temperature of the shift catalyst body 3a and variations in concentration of carbon monoxide in gas after passage through the shifter, and a temperature of the shift catalyst body 3a is changed according to both of the variations. Namely, when a concentration of carbon monoxide increases and a catalyst temperature exceeds the upper or lower limit value determined on the curve of Figure 2, it is possible to judge that a change in catalyst temperature is a cause of an increased concentration of carbon monoxide.

When a catalyst temperature of the shift catalyst body 3a that is measured by the temperature measurement part 8 is larger than the upper limit value, the gas temperature adjustment part 9 is operated to cool hydrogen gas supplied to the shifter 3, so that the catalyst temperature of the shift catalyst body 3a is reduced.

Furthermore, when a catalyst temperature of the shift catalyst body 3a that is measured by the temperature measurement part 8 is lower than the lower limit value, the gas temperature adjustment part 9 is operated to heat hydrogen gas supplied to the shifter 3, so that the catalyst temperature of the shift catalyst body 3a is increased.

The above operation allows the shift catalyst body 3a to operate within a range of normal operating temperatures, so that carbon monoxide is reduced with stability.

Besides, when a catalyst temperature of the shift catalyst body 3a is increased or reduced by the operation of the gas temperature adjustment part 9 but a detected concentration of carbon monoxide is not reduced, as in the case of Embodiment 1, water may be supplied from the water supply part 5 under control of the supply amount control part 10 to conduct shift reaction on carbon monoxide and water. Additionally, when supply of water from the water supply part 5 is increased but carbon monoxide is not reduced, supply of a raw material, which has hydrocarbon as a main component from the raw material supply part 4, may be reduced. Further, in addition to a reduction of the raw material from the raw material supply part 4, water supply from the water supply part 5 may be reduced.

Besides, in the present embodiment, an electric heater for heating gas and an air-cooling fan for cooling are combined as the gas temperature adjustment part. Any kind of means is applicable as a temperature adjustment means of the present invention as long as the means can adjust a temperature of hydrogen gas, which is supplied from the reformer 1, based on a temperature detected by the temperature measurement part 8 and the predetermined upper limit and lower limit values. For example, gas leaving the reformer 1 has a temperature of about 700°C, but in many cases, the gas is used at about 300°C in the shifter. In this case, it is necessary to cool the gas leaving it passes through the reformer and then to supply the gas into the shifter. Therefore, with a cooling fan or a cooling solvent, a temperature of gas can be adjusted according to a cooling quantity alone.

Also, when a measured temperature of the shift catalyst body that is detected by the temperature measurement part 8 is between the above value and the lower limit value but a detected concentration of carbon monoxide is at the upper limit value or more, as in the case of Embodiment 1, the operation of the gas temperature adjustment part 8 may be omitted and a supply amount of water and/or a raw material may be adjusted immediately as in the case of Embodiment 1.

### (Example 1)

A shift catalyst used in the present invention was prepared as follows : CeO₂ and a Pt salt solution were used, Pt was dispersed and carried on CeO₂, and sintering was conducted thereon. CeO₂ carrying Pt (a quantity of carried Pt was 3 wt%) was caused to form a coating on a cordierite honeycomb, which was 100mm in diameter and 50mm in length, so as to produce a shift catalyst body 3a.

The following will discuss an example of an operation of a hydrogen generating apparatus according to Embodiment 1 of the present invention, which includes a shifter 3 having the above described shift catalyst body 3a.

First, a hydrogen gas supply part serving as a reformer 1 was operated. Methane gas was used as a raw material supplied from the raw material supply part 5, 3 moles of water was added to 1 mol of methane gas, and water vapor reforming was carried out so as to generate hydrogen gas containing about 10% of carbon monoxide and about 10% of carbon dioxide.

The hydrogen gas was supplied to the shifter 3, and a shift reaction was caused to proceed to reduce carbon monoxide. At this moment, the operation was carried out while a temperature measured by a temperature measurement part 8 was set at about 300°C. The temperature measurement part 8 was placed upstream from a flow of hydrogen gas of the shift catalyst body 3a. In the operating conditions of the present example, carbon monoxide had a concentration of about 0.5% in a steady state.

Subsequently, only an amount of methane gas supplied to the reformer 3 was increased by about 10% and the gas was supplied to the shifter 3. Since an amount of gas flow was increased and a ratio of methane and water was reduced, a concentration of carbon monoxide was likely to increase. The concentration was measured in a carbon monoxide concentration detection part at an exit of the shifter.

According to the increase, control was conducted to increase an amount of water supplied to the reformer 3, so that a proper ratio of methane and water was obtained and a concentration of carbon monoxide was immediately reduced to about 0.5% at the exit.

### (Example 2)

The following will discuss another example of an operation of a hydrogen generating apparatus according to Embodiment 2 of the present invention. As in the case of Example 1, a hydrogen gas supply part serving as a reformer 1 was operated. Methane gas was used as a raw material supplied from a raw material supply part 5, 3 moles of water was added to 1 mol of methane gas , and water vapor reforming was carried out to generate hydrogen gas containing about 10% of carbon monoxide and about 10% of carbon dioxide. The hydrogen gas was supplied to the shifter 3, a shift reaction was caused to proceed to reduce carbon monoxide . At this moment, the operation was carried out while a temperature measured by a temperature measurement part 8 was set at about 300°C. The temperature measurement part 8 was positioned upstream from a flow of hydrogen gas of the shift catalyst body 3a. In the operating conditions of the present example, carbon monoxide had a concentration of about 0.5% in a steady state.

Subsequently, the gas temperature adjustment part 9 was operated, and the shift catalyst body 3a was heated to about 350°C. At this moment, the above operation was carried out on purpose to set a catalyst temperature of the shift catalyst body 3a at a high temperature in a simulated manner and to increase a concentration of carbon monoxide. With this operation, a concentration of carbon monoxide increased to about 0.8% at an exit of the shifter 3.

It was judged that a concentration of carbon monoxide was increased according to a catalyst temperature increased by an abnormal condition, the gas temperature adjustment part 8 was operated, and control was conducted to cool the shift catalyst body 3a to about 300°C. It was confirmed that the above control immediately reduced a concentration of carbon monoxide in gas to about 0.5%.

Additionally, in the present example, the gas temperature adjustment part was operated while an upper limit value of a concentration of carbon monoxide was set at 0.8% and an upper limit value of a temperature of the shift catalyst was set at 350°C. These conditions need to be determined for the device depending upon the other operating conditions such as a kind of the catalyst, a size of the device, and an amount of supplied gas, so that the conditions cannot be limited.

### (Example 3)

The following will discuss another example of an operation of a hydrogen generating apparatus according to Embodiment 2 of the present invention.

As in the case of Example 1, a hydrogen gas supply part serving as a reformer 1 was operated. Methane gas was used as a raw material, 3 moles of water was added to 1 mol of methane gas, and water vapor reforming was carried out to generate hydrogen gas containing about 10% of carbon monoxide and about 10% of carbon dioxide. The hydrogen gas was supplied to a shifter 3, a shift reaction was caused to proceed to reduce carbon monoxide. At this moment, the operation was carried out while a temperature of a temperature measurement part was set at about 300°C. The temperature measurement part was positioned upstream from a flow of hydrogen gas of a shift catalyst body 3a. In the operating conditions of the present example, carbon monoxide had a concentration of about 0.5% in a steady state.

Subsequently, a gas temperature adjustment part 8 was operated, and the shift catalyst body 3a was cooled to about 250°C. Besides, the above operation was carried out on purpose to set a catalyst temperature of the shift catalyst body 3a at a low temperature in a simulated manner and to increase a concentration of carbon monoxide . With this operation, a concentration of carbon monoxide increased to about 0.8% at an exit of the shifter 3.

It was judged that a concentration of carbon monoxide was increased according to a catalyst temperature reduced by an abnormal condition, the gas temperature adjustment part 8 was operated, and control was conducted to heat the shift catalyst body 3a to about 300°C. It was confirmed that the above control immediately reduced a concentration of carbon monoxide in gas to about 0.5%.

Additionally, in the present example, the gas temperature adjustment part 8 was operated while an upper limit value of a concentration of carbon monoxide was set at 0.8% and an lower limit value of a temperature of the shift catalyst body was set at 250°C. These conditions need to be determined for the device depending upon the other operating conditions such as a kind of the catalyst, a size of the device, and an amount of supplied gas, so that the conditions cannot be limited.

As a configuration other than the above described examples, when a Cu-Zn catalyst is used as a shift catalyst, it is desirable to set a value within a range of a lower limit temperature of 180°C to an upper limit temperature of 280°C.

Further, the present embodiment described that a supply amount of a raw material and water and a temperature of hydrogen gas from the reformer 1 are both controlled by the gas temperature adjustment part 9 and the supply amount control part 10. The present invention is not limited to the above configuration. The following configuration is also applicable: the gas temperature adjustment part 9 is omitted, only the supply amount control part 10 is provided, a supply amount of water and/or a raw material is adjusted according to a concentration of carbon monoxide and a temperature of a shift catalyst so as to maintain a low concentration of carbon monoxide.

Additionally, the present embodiment described that amounts of a supplied raw material and water and a temperature of hydrogen gas from the reformer 1 are both controlled by the gas temperature adjustment part 9 and the supply amount control part 10. The present invention is not limited to the above configuration. The following configuration is also applicable: the supply amount control part 10 is omitted, only the gas temperature adjustment part 9 is provided, a temperature of hydrogen gas from the reformer 1 is adjusted so as to maintain a low concentration of carbon monoxide.

### (Embodiment 3)

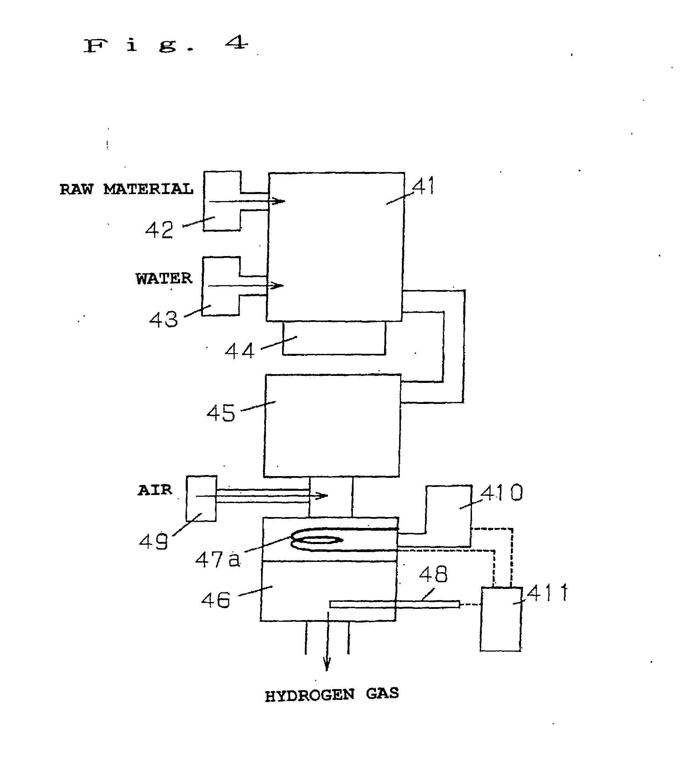

Figure 4 is a structural diagram showing a hydrogen generating apparatus according to Embodiment 3 of the present invention. In Figure 4, reference numeral 41 denotes a reformer, reference numeral 42 denotes a raw material supply part, reference numeral 43 denotes a water supply part, reference numeral 44 denotes a reforming heating part, and reference numeral 5 denotes a shifter. The above parts constitute a gas supply part of the present invention, which supply hydrogen gas.

Reference numeral 46 denotes a purifying part having a purify catalyst body (not shown) therein. Here, a catalyst carrying Pt on an alumina carrier is used as the purifying catalyst. Further, reference numeral 47a denotes an electric heater serving as heating means of the present invention.

Reference numeral 48 denotes a temperature detection part, which is disposed in a space downstream from the purify catalyst body of the purifying part 46. Moreover, reference numeral 49 denotes an air pump, and reference numeral 410 denotes a cooling fan serving as cooling means of the present invention. Moreover, reference numeral 411 denotes control means which controls operations of the electric heater 47a and the cooling fan 410 according to a detected temperature of the temperature detection part 48 and corresponds to control means of the present invention.

The following will describe an operation of a hydrogen generating apparatus configured thus according to the present embodiment. Hence, an embodiment of a controlling method will be discussed regarding the hydrogen generating apparatus of the present invention.

On starting of the device, heating of the reformer 41 is started by the reforming heating part 44. Subsequently, methane gas is used as a hydrocarbon component, which is a raw material, the gas is supplied from the material supply part 2, and 4 moles of water is supplied to a reforming catalyst of the reformer 1 from the water supply part 3 relative to 1 mol of methane gas.

Here, an amount of supplied methane is set at 350L/time, a quantity of heat is controlled by the reforming heating part 44 so as to set a temperature of a reforming catalyst body at about 700°C, and a water vapor reforming reaction is caused to proceed. Hydrogen gas leaving the reformer 41 is supplied to the shifter 5.

Hydrogen gas supplied to the shifter 45 contains carbon monoxide together with hydrogen. A shift reaction of carbon monoxide and water occurs in the shifter 45. The hydrogen gas in which carbon monoxide is reduced in the shifter 45 is supplied to the purifying part 6.

In the present embodiment, under the control of the control means 411, heating to the reformer 41 and power application to the electric heater 47a are simultaneously started to heat hydrogen gas supplied to the purifying section 46. Hydrogen gas supplied to the purifying part 46 has a dew point of about 70 to 80°C. Thus, power is applied to the electric heater 47a until a temperature detected by the temperature detection part 48 exceeds 150°C as a temperature which does not allow water vapor contained in hydrogen gas to condense and allows an oxidizing reaction to proceed.

Hence, the purifying part 46 immediately increases in temperature. The starting time of the device can be shortened to about 30 minutes, which is about one third of about 90 minutes in the absence of the electric heater 47a.

Further, water vapor contained in hydrogen gas does not condense in the purifying part 46, it is possible to prevent deterioration in properties of the purifying catalyst without exfoliation of the carried catalyst.

After completion of starting as well, power is applied to the electric heater 47a when a temperature detected by the temperature detection part 48 is below 140°C, and the application is interrupted when the temperature exceeds 150°C.

Air is mixed with hydrogen gas by the air pump 49, so that when the purify catalyst body has a temperature higher than about 100°C in the purifying part 46, a selective oxidation reaction of carbon monoxide and air proceeds.

Thus, even after a temperature of the purify catalyst body exceeds 150 and application of power to the electric heater 47a is stopped, the temperature rises.

Since the selective oxidation reaction is an exothermic reaction, a temperature rises as the reaction proceeds. As the temperature increases, an inverse shift reaction of carbon dioxide and hydrogen proceeds so as to increase a concentration of carbon monoxide.

An upper limit catalyst temperature for effectively reducing carbon monoxide is set at about 230°C as a guide. Thus, when the temperature detection part 48 has a temperature of 230°C, the cooling fan 10 is operated.

Further, in order to efficiently maintain an oxidizing reaction of carbon monoxide, when the temperature detection part 48 has a temperature of 200°C, the cooling fan 410 is stopped. With this control, carbon monoxide in gas at an exit of the purifying part can be reduced to 100 ppm or lower.

However, in the case where the hydrogen generating apparatus of the present embodiment is used as a hydrogen generating apparatus of a fuel cell, when an amount of supplied raw material gas is reduced according to variations in load of the fuel cell, an amount of carbon monoxide is reduced in hydrogen gas supplied to the purifying part 46, and a quantity of heat generated by a reaction in the purifying part 46 is reduced. As a result, a temperature in the purifying part 46 is below 200°C. Even when the cooling fan 410 is stopped, a temperature in the purifying part 46 is further reduced. When a temperature detected in the temperature detection part 48 is below 140°C, power is applied to the electric heater 7a to quickly respond to the lowered temperature, so that a concentration of carbon monoxide does not rise in gas at the exist of the purifying part. Besides, in the above described operation, neither of the electric heater 47a nor the cooling fan 410 is used within a range of 150 to 200°C, and an oxidizing reaction is carried out only depending upon heat of reaction in the catalyst.

As described above, in order to quickly respond to a change in reaction conditions of the purifying part 46, the combination of the electric heater (heating means) and the cooling fan (cooling means) is particularly effective. However, the present invention may include only the electric heater and effects can be obtained to some extent.

As described above, according to a temperature detected in the temperature detection part 48, the starting and stopping of the electric heater 47a and the cooling fan 410 are instructed by the control part 411.

Here, ON/OFF control is used for a set temperature. Needless to say, a more precise control method such as PI and PID control is also available.

Additionally, as the purifying catalyst, a Ru/alumina catalyst having Ru carried in an alumina carrier, a catalyst having as a main body a precious metal such as a Pt-Ru/alumina catalyst, which has Pt-Ru in an alumina carrier, or a material such as silica and zeolite is also applicable as a carrier.

Additionally, a set temperature for keeping the catalyst body active is varied depending upon the kind of the used catalyst, the service conditions, and the configuration of the device. Hence, the set temperature is not limited to a value of the present embodiment but can be determined by the above conditions.

### (Embodiment 4)

In order to more positively reduce carbon monoxide in hydrogen gas, it is effective to configure a purifying part with a plurality of stages. Here, an example of the purifying part having two stages will be described.

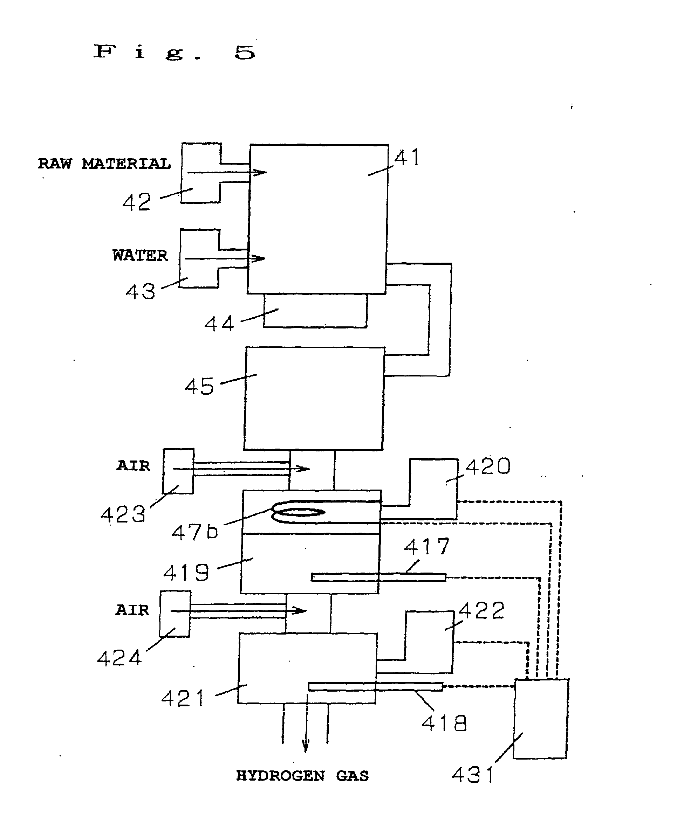

Figure 5 is a structural diagram showing a hydrogen generating apparatus according to Embodiment 4 of the present invention. In Figure 5, the same parts or the corresponding parts will be indicated by the same reference numerals, and the specific explanation thereof will be omitted. Further, reference numeral 419 denotes a first purifying part, and reference numeral 421 denotes a second purifying part. The purifying parts each include purifying catalyst bodies (not shown) . Here, a catalyst having Pt carried in an alumina carrier is used.

Further, reference numerals 420 and 422 denote first and second cooling fans as cooling means. Reference numerals 417 and 418 denote first and second temperature detection parts, which are respectively provided in spaces in downstream of the purify catalyst body. Reference numerals 423 and 424 denote first and second air pumps.

With the above described configuration, as in the case of Embodiment 3, heating on a reformer is started, a raw material and water are supplied, and power is applied to an electric heater 47b. Here, the above operation is conducted until temperatures detected in the first temperature detection part 417 and the second temperature detection part 418 both exceed 150°C.

With this operation, the purifying parts 419 and 421 immediately increase in temperature. The starting time of the device can be shortened to about 30 minutes, which is about one third of about 90 minutes in the absence of an electric heater 47b.

After the completion of starting as well, power is applied to the electric heater 47b when any of temperatures detected by the first and second temperature detection parts 417 and 418 are below 140°C. The application of power is interrupted when both temperatures exceed 150°C.

As in the case of Embodiment 3, in the first purifying part 419, the first cooling fan 420 is operated when a temperature detected in the first temperature detection part 417 exceeds 230°C. The first cooling fan 420 is stopped when the detected temperature is below 200°C.

In the second purifying part 421, the second cooling fan 422 is operated when a temperature detected in the second temperature detection part 418 exceeds 200°C. The second cooling fan 422 is stopped when the detected temperature is below 170°C.

Hydrogen gas supplied to the second purifying part 421 is lower in concentration of carbon monoxide than gas supplied to the first purifying part 419. Hence, a reaction proceeds at a lower temperature than the first purifying part 419. With this control, carbon monoxide in gas at an exit of the purifying part can be reduced to 10 ppm or less.

Besides , as in the case of Embodiment 3, in the present embodiment as well, the purifying parts 419 and 421 are reduced in temperature due to a change in reaction conditions that include variations in load. The electric heater 47b is operated when one of temperatures of the first temperature detection part 417 and the second temperature detection part 418 is below 140°C. Thus, it is possible to respond to variations in temperature in the event of changes in reaction conditions without an increase in concentration of carbon monoxide in gas at the exit of the purifying part.

In this case, the starting and stopping of the electric heater 47b, the first cooling fan 420 and the second cooling fan 422 are controlled by a control part 431, which corresponds to control means of the present invention, according to temperatures detected by the first temperature detection part 417 and the second temperature detection part 418.

Additionally, as in the case of Embodiment 3, as the purifying catalyst, a Ru/alumina catalyst having Ru carried in an alumina carrier, a catalyst having as a main body a precious metal such as a Pt-Ru/alumina catalyst, which has Pt-Ru in an alumina carrier, or a material such as silica and zeolite is also applicable as a carrier.

Also, although the purifying part has two stages in the present embodiment, the same effect can be obtained with more stages in the present invention.

Further, the cooling means can be omitted in some configurations of the device and some service conditions . In view of various conditions , it is preferable to provide the heating means and cooling means and use them in combination in order to positively conduct the operation with stability.

### (Embodiment 5)

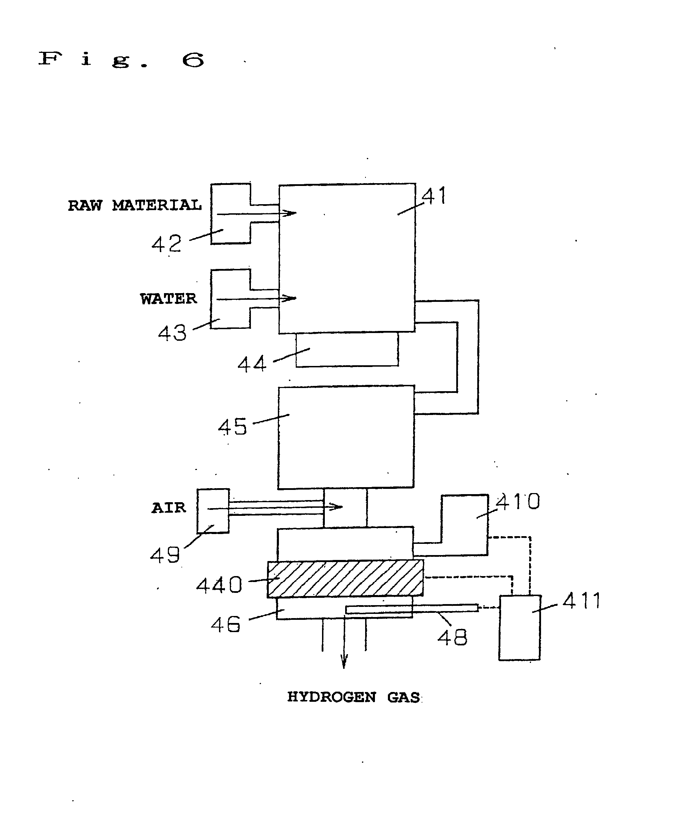

Figure 6 is a structural diagram showing a hydrogen generating apparatus according to Embodiment 5 of the present invention. The present embodiment is different from Embodiment 3 of Figure 4 in that an electric heater 440 serving as heating means is wound around the outer periphery of a purifying part 6.

The same operation as Embodiment 3 is conducted when the device is started, and application of power to the electric heater 440 is started concurrently with heating to a reformer 41. As in the case of Embodiment 1, the above operation is conducted until a temperature detection part 48 detects a temperature of 150°C as a temperature which does not allow water vapor contained in hydrogen gas to condense and causes an oxidizing reaction to proceed.

Further, after completion of starting as well, power is applied to the electric heater 440 when a temperature detected by the temperature detection part 48 is below 140°C, and the application of power is interrupted when the temperature is higher than 150°C.

In this case, the starting and stopping of the electric heater 440 and a cooling fan 410 are instructed by a control part 441 according to a temperature detected by the temperature detection part 8.

As described above, in addition to by warming hydrogen gas supplied to the purifying part 46, the same effect as Embodiment 1 can be obtained by warming the purifying part from outside to increase a catalyst temperature. Additionally, the electric heater 440 of the present embodiment and the electric heater 47a of Embodiment 1 can be used in combination.

### (Embodiment 6)

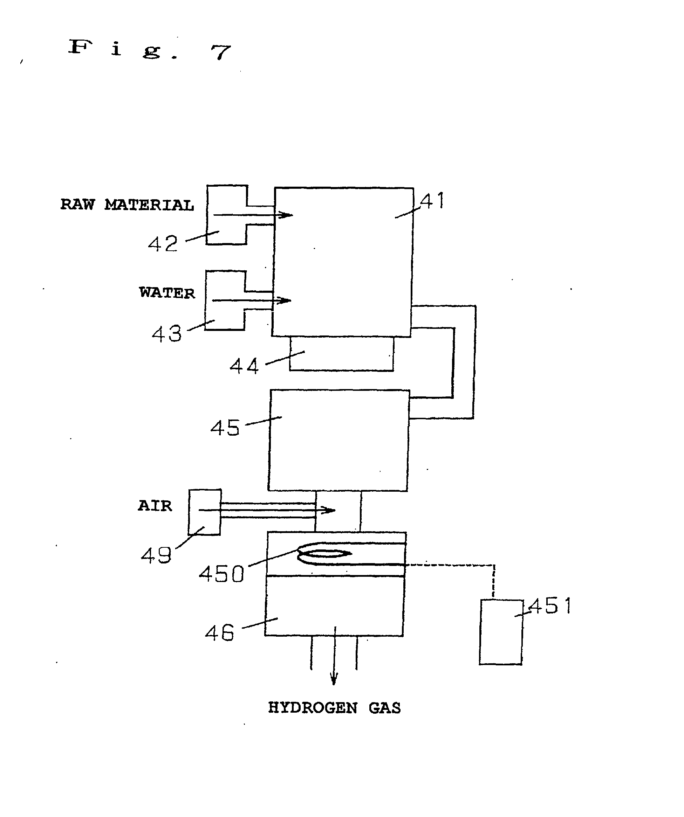

Figure 7 is a structural diagram showing a hydrogen generating apparatus according to Embodiment 6 of the present invention. The present embodiment is different from Embodiment 3 of Figure 4 in that a PTC heater 450 is used as heating means and thus a temperature detection part is removed from the configuration. The PTC heater 450 is known as a self-temperature control heater in which a resistance coefficient is positive to a temperature and a resistance increases with temperature, so that current is less likely to flow.

On starting of the device, the same operation as Embodiment 3 is conducted, and the application of power to the PTC heater 450 is started concurrently with heating on a reformer 41. In the PTC heater 450, a resistance is set so as to apply power until a purifying part has a temperature of about 150°C. Hence, on starting, when the purifying part 46 exceeds about 150°C, current is not applied to the PTC heater 450 and heating is completed. Moreover, when the purifying part 46 has a temperature lower than about 150°C, power is automatically applied to the PTC heater 50 with proper current and heating is conducted.

With this operation, a temperature is maintained so as to keep the activity of a purifying catalyst, and a concentration of carbon monoxide is not increased in gas at an exit of the purifying part. Further, it is not necessary to mount a temperature detection part because the PTC heater 450 is mounted.

Here, the operation of the PTC heater 450 is instructed by a control part 451 on starting.

Besides, needless to say, a temperature for keeping the activity of the purifying catalyst can be maintained also by providing the temperature detection part and coolingmeans, using the control part 451 as control means of the present invention, and using the PTC heater and the cooling means of the present invention in combination.

### (Embodiment 7)

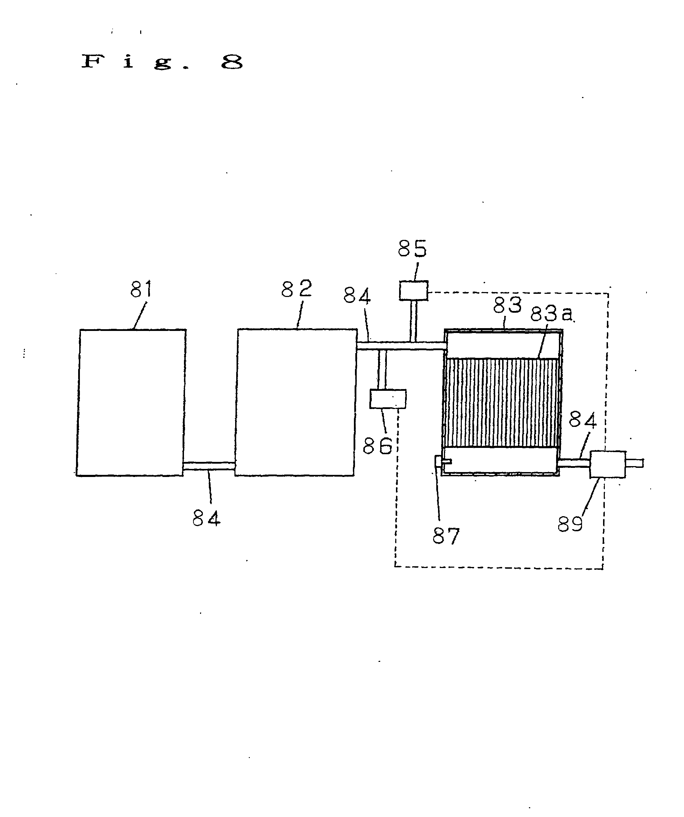

Figure 8 is a structural diagram showing a hydrogen generating apparatus according to Embodiment 7 of the present invention. In Figure 8, reference numeral 81 denotes a reformer which serves as a hydrogen gas supply part and has a reforming catalyst body of a water vapor reforming reaction. As the reform catalyst body, a catalyst having a precious metal carried on an alumina substrate is used. Further, in this configuration, a burner (not shown) is used as heating means of the reforming catalyst body. Reference numeral 82 denotes a shifter which stores a shift catalyst body. As the shift catalyst body, a Cu-Zn shift catalyst is used. Reference numeral 83 denotes a purifying part storing a purify catalyst body 83a. As the purify catalyst body 83a, a catalyst having a precious metal is used. The precious metal is carried on an alumina substrate and is dipped on cordierite honeycomb. Reference numeral 84 denotes a gas.passage which supplies gas in order of the reformer 81, the shifter 82, and the purifying part 83, and has an exit on the purifying part 83. Reference numeral 85 denotes a device for supplying oxidizing gas to an entrance of the purifying part 83. The device is used as an air supply part in the present embodiment. Reference numeral 86 denotes a shifting carbon monoxide concentration detection part which is provided on the gas passage 4 at the exit of the shifter 2. The detection part uses infrared adsorption characteristics of carbon monoxide to measure a concentration of carbon monoxide in gas leaving the shifter 82. Reference numeral 87 denotes a purifying temperature detection part for measuring a gas temperature leaving a purify catalyst body 83a. Further, reference numeral 89 denotes control means which corresponds to control means of the present invention and controls supply of hydrogen gas from the purifying part 83 to the outside according to a concentration of carbon monoxide that is detected by the shifting carbon monoxide concentration detection part 86 and a gas temperature detected by the purifying temperature detection part 88.

The following will discuss an operation during supply of hydrogen in the hydrogen generating apparatus and an embodiment of a method for controlling the hydrogen generating apparatus according to the present invention.

First, in a steady operation, when methane gas , which is a hydrocarbon component, is used as a raw material, to a reformer 1 having a reforming catalyst body heated to 700 to 750°C by heating means, 3 moles of water is additionally supplied to 1 mol of methane gas so as to cause water vapor reforming to proceed. Gas leaving the reformer 81 is supplied to the shifter 82 through the gas passage 84. In the shifter 82, carbon monoxide and water vapor in gas leaving the reformer 81 is subjected to a shift reaction by a shift catalyst body to obtain carbon dioxide and hydrogen. A concentration of carbon monoxide in gas after shift conversion is measured by the shifting carbon monoxide concentration detection part 86, which is placed on the gas passage 84 at the exit of the shifter 2. Moreover, air is supplied as oxidizing gas to the gas passage 84 from the air supply part 85. Hydrogen gas after air supply passes through the purifying part 83. After carbon monoxide is further reduced by oxidation or methanation, the gas is supplied as generated hydrogen gas to the outside of the hydrogen generating apparatus from the gas passage 84.

Next, an operation on starting will be discussed. First, the heating means is operated to heat the reforming catalyst body, and 3 moles of water is added to 1 mol of methane gas and is supplied to the reformer 81, which serves as a hydrogen gas supply part, to cause water vapor reforming to proceed. The gas is supplied to the shifter 82, the shifter 82 is heated, and a shift reaction is caused to proceed, so that a concentration of carbon monoxide is reduced. Furthermore, air containing a quantity of oxygen twice a quantity of carbon monoxide is supplied to the shifted gas by the air supply part 85 in preparation for a steady operation. Thereafter, the gas is supplied to the purifying part 83. Like the shifter 82, a heat quantity of gas is used to accelerate heating of the purify catalyst body 83a and to reduce a concentration of carbon monoxide.

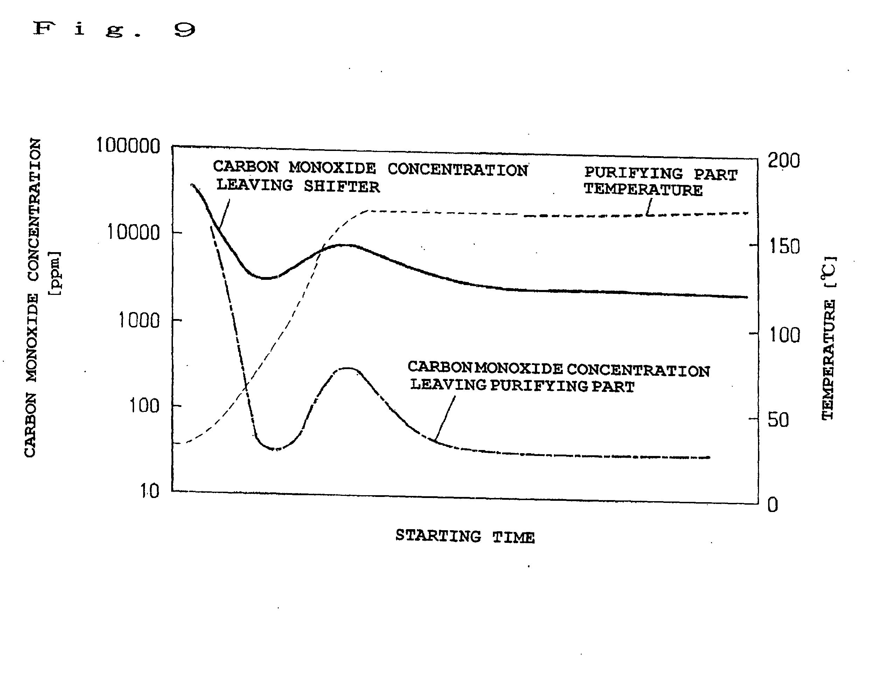

At this moment, a concentration of carbon monoxide leaving the shifter 82 is measured, and measurement is also made on a temperature of gas leaving the purifying part 83 and a concentration of carbon monoxide leaving the purifying part 83. As to the results, Figure 9 shows an example of variations in concentration of carbon monoxide leaving the shifter 82 and leaving the purifying part 83, and variations in gas temperature leaving the purifying part 3 and after starting.

As shown in Figure 9, initially on starting, a concentration of carbon monoxide leaving purifying part 83 decrease with a reduction in concentration of carbon monoxide leaving the shifter 82. Both in the shifter 82 and the purifying part 83, reduced concentrations of carbon monoxide are increased once again. This is because a temperature of the reformer 81 rises so as to increase a concentration of carbon monoxide at the exit of the reformer 81, and temperatures of the catalyst bodies do not sufficiently increase in the shifter 82 and the purifying part 83.

As described above, when the starting state of the device is judged only by a concentration of carbon monoxide, a concentration of carbon monoxide is increased after that.

Meanwhile, it is understood that when the starting state of the device is judged by the control means 89 due to the fact that a concentration detected by the shifting carbon monoxide concentration detection part 86 is lower than a set value and a temperature detected by the purifying temperature detection part 87 is higher than a set value, a concentration of carbon monoxide does not increase after that.

Next, the following will discuss another characteristic of judging the starting of the device according to the present invention.

When a concentration of carbon monoxide before the purifying part 83 exceeds an assumed value, air commensurate with the concentration of carbon monoxide is not supplied to the purifying part 83, resulting in an increase in concentration of carbon monoxide leaving the purifying part 83. However, the purifying part 83 is heated to a proper operating temperature by heat held in hydrogen gas supplied from the reformer 81 and the shifter 82. As a result, when the starting is judged by the control means 89 only depending upon a detected temperature of the purifying temperature detection part 87, supply of hydrogen is started in a state in which a concentration of carbon monoxide is not reduced with stability.

Even in such a case, as described in the present invention, the starting of the device is judged when a concentration detected by the shifting carbon monoxide concentration detection part 86 is lower than a set value and a temperature detected by the purifying temperature detection part 87 is higher than a set value, so that it is possible to prevent supply of hydrogen from being started in a state in which a concentration of carbon monoxide is high.

Additionally, among factors responsible for an increased concentration of carbon monoxide before passage through the purifying part 83, deterioration in property of the shift catalyst body 82a (oxidation or deterioration with time) is included, or an operation in a condition with a low S/C (steam carbon ratio) is included, which is causedby insufficient supply of water as a raw material due to a breakdown of a supply system. In order to respond to the above factors, the following control may be conducted in combination with the present invention: a concentration of carbon monoxide leaving the purifying part 83 is reduced by an operation of increasing a quantity of air supplied to the purifying part 83 or reexamining an amount of a raw material supplied to the reformer 1 upon detection of a concentration higher than the set value in the shifting carbon monoxide concentration detection part 86.

Next, the following will briefly describe an example in which hydrogen gas is supplied to a fuel cell apparatus including the hydrogen generating apparatus of Embodiment 7 and a polymer electrolyte fuel cell (not shown).

When a starting state was judged by the shifting carbon monoxide concentration detection part 86 only depending upon a detected concentration of carbon monoxide, electric power generation was reduced due to carbon monoxide after hydrogen gas was supplied. Meanwhile, in the control means 89, a set value of a concentration detected by the shifting carbon monoxide concentration detection part 86 was set at 0.5%, a set value of a temperature detected by the purifying temperature detection part 87 was set at 150°C, and a starting state was judged to supply hydrogen gas to the polymer electrolyte fuel cell. In this case, electric power generation was maintained in the fuel cell without causing any problems after supply of hydrogen gas.

Besides, a set value of a detected concentration in the shifting carbon monoxide concentration detection part 86 for judging a starting state and a set value of a detected temperature in the purifying temperature detection part 87 depend upon the hydrogen generating apparatus in terms of the configuration of the device, the kind of used catalyst, an amount of supplied hydrogen, and so on. Regulation is necessary for each device, so that the set values are not limited to those of the present example.

For example, hydrogen gas leaving the shifter 82 was supplied to the purifying part 83 to further reduce carbon monoxide contained therein. In this case, it is desirable to minimize a concentration of carbon monoxide that is reduced in the purifying part 83. The value depends upon the operating conditions of the solid polymer electrolyte fuel cell and the configuration of the catalyst, and the value is preferably set at 500 ppm or lower at the maximum. One hundred ppm or lower is desirable to stabilize power generation.

In the shifter 82, in order to provide conditions for reducing carbon monoxide to the above concentration in the purifying part 83, it is desirable to set the concentration at 10000 ppm or lower at the maximum though it varies depending on the operating condition and the configuration of the catalyst. Five thousand ppm or lower is desirable to reduce the concentration with stability.

Therefore, regarding a concentration of carbon monoxide that is detected by the shifting carbon monoxide concentration detection part 86, it is desirable that a set value be 5000 ppm or lower in view of the operating conditions.

Next, in the purifying part 83, a temperature range is set so as to obtain catalytic activity for use, thereby conducting the operation with stability. In order to have a concentration of carbon monoxide at 100 ppm or lower, in the Pt catalyst used in the present example, it is desirable to set a value for the purifying temperature detection part 87 within a range from a lower limit temperature of 100°C to an upper limit temperature of 230°C. The range depends upon the operating conditions, the configuration of the catalyst, and the composition of the catalyst.

As described above, on starting, a concentration detected by the shifting carbon monoxide concentration detection part 86 is lower than a set value and a temperature detected by the purifying temperature detection part 87 is higher than a set value. Thus, it is judged that the shifter enters a state of stable operations and a concentration of carbon monoxide can be reduced with stability.

Besides, since a temperature is less likely to rise downstream of the purify catalyst body 83a, in the present embodiment, a gas temperature downstream of the purify catalyst body 83a is measured as a temperature detected in the purifying part, and the gas temperature is used as a reference for judging completion of starting in the hydrogen generating apparatus.

Here, the used purifying catalyst was prepared as follows: Al₂O₃ and a Pt salt solution were used, Pt was dispersed and carried on Al₂O₃, and sintering was conducted thereon. Al₂O₃ carrying Pt (a quantity of carried Pt was 3 wt%) was caused to form a coating on a cordierite honeycomb, which was 100mm in diameter and 50mm in length, so as to produce the shift catalyst body. The present invention is not limited to the above purifying catalyst.

### (Embodiment 8)

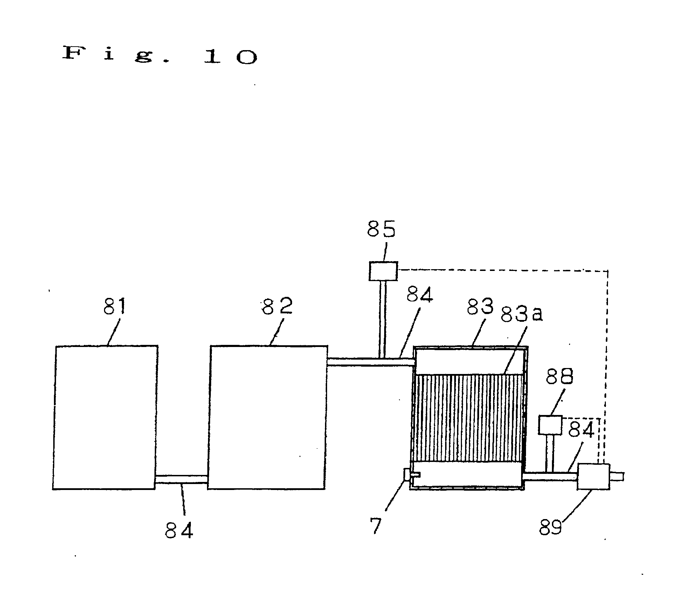

Figure 10 is a structural diagram showing a hydrogen generating apparatus according to Embodiment 8 of the present invention. The present embodiment is substantially identical in configuration to the hydrogen generating apparatus according to Embodiment 7 of the Figure 1. The explanation on the same parts will be omitted and only the difference will be discussed. The present embodiment is different in that a purifying carbon monoxide concentration detection part 88 is provided on a gas passage 84 at an exit of a purifying part 83 in place of the shifting carbon monoxide concentration detection part 86.

In the present embodiment configured thus, substantially the same operation is conducted as the hydrogen generating apparatus of Embodiment 7 to reduce a concentration of carbon monoxide in the shifter 82. The difference is that on starting when supply of gas is started from a reformer 81 which is a hydrogen gas supply part, when control means 89 judges that a concentration detected by the purifying carbon monoxide concentration detection part 88 is lower than a set value and a temperature detected by a purifying temperature detection part 87 is higher than a set value, supply of generated hydrogen gas is started.

Fundamentally, the same effect can be obtained as that of Embodiment 7. In the above configuration, since a concentration of carbon monoxide is directly measured at the exit of the purifying part 83, it is possible to start supplying hydrogen gas generated based on more correct judgment on starting.

Next, the following will briefly discuss an example in which hydrogen gas is supplied to a polymer electrolyte fuel cell (not shown) from the hydrogen generating apparatus of Embodiment 8.

The reformer 81, which was a hydrogen gas supply part, was started to supply gas sequentially to the shifter 82 and the purifying part 83. After judgment of starting in the control means 89, hydrogen gas was supplied to the polymer electrolyte fuel cell.

When a starting state was judged only by a concentration detected by the purifying carbon monoxide concentration detection part 88, power generation was reduced by carbon monoxide after hydrogen gas was supplied. This was because at the initial starting having a low temperature in the reformer and a low concentration of carbon monoxide, a concentration of carbon monoxide leaving the purifying part 83 temporarily decreased with a reduction in concentration of carbon monoxide leaving the shift catalyst, and then, a concentration of carbon monoxide at the exit of the reformer 81 increased with temperature of the reformer 81, and a temperature of each catalyst body of the shifter 82 and the purifying part 83 does not sufficiently increase, resulting in insufficient reduction in concentration of carbon monoxide.

Meanwhile, as described in the present embodiment, when a set value of a detected concentration was set at 20 ppm in the purifying carbon monoxide concentration detection part 88, a set value of a detected temperature of the purifying temperature detection part is set at 150°C, a starting state is judged, and hydrogen gas is supplied to the polymer electrolyte fuel cell, power generation can be maintained in the fuel cell without causing any problems after supply of hydrogen gas.

Besides, a set value of a detected concentration in the purifying carbon monoxide concentration detection part 88 and a set value of a detected temperature in the purifying temperature detection part 87, for judging a starting state depend upon the hydrogen generating apparatus in terms of the configuration of the device, the kind of used catalyst, a supply of hydrogen, and so on. Regulation is necessary for each device, so that the above values are not limited to those of the present example.

For example, when hydrogen gas is supplied to the solid polymer electrolyte fuel cell, the value depends upon a concentration of carbon monoxide, the operating conditions of the solid polymer electrolyte fuel cell, and the configuration of the catalyst. The value is preferably set at 500 ppm or lower and at 100 ppm or lower to stabilize power generation. Therefore, it is desirable that a set value of the purifying carbon monoxide concentration detection part 88 be 100 ppm or lower in view of the operating conditions.

Further, the present invention may be realized as a fuel cell apparatus, which includes the hydrogen generating apparatus of the present invention and the fuel cell operated by hydrogen gas supplied from the hydrogen generating apparatus.

Moreover, the present invention is programs for causing a computer to conduct all or some of the function of the supply control means or the control means of the above described hydrogen generating apparatus of the present invention. The programs are operated together with the computer.

Furthermore, the present invention is a medium which carries programs for causing the computer to carry out the function of the supply control means or the control means of the above described hydrogen generating apparatus according to the present invention, the medium being readble by the computer and causes the read programs to conduct the above function in cooperation with the computer.

Additionally, some means of the present invention represent some of a plurality of means or a part of the function of means.

Further, the present invention also includes a recording medium which records the programs of the present invention and can be read by the computer.

Moreover, as an embodiment, the programs of the present invention may be recorded in the recording medium being read by the computer and may be operated together with the computer.

Also, as an embodiment, the programs of the present invention may be transmitted through a transmission medium, may be read by the computer, and may be operated together with the computer.

Further, the recording medium includes a ROM. The transmission medium includes a transmission medium such as the Internet, light, radio waves, and acoustic waves.

Besides, the computer of the present invention is not limited to pure hardware such as CPU but may include firmware, an OS, and peripheral equipment.

Additionally, as described above, the present invention may be configured as either of software or hardware.

### Industrial Applicability

According to the present invention, in a hydrogen generating apparatus which conducts water vapor reforming on a hydrocarbon component and supplies hydrogen, it is possible to readily realize an apparatus which can quickly respond to an increased concentration of carbon monoxide due to variations in temperature of a shift catalyst body and a change in supplied gas, and the like, demonstrate with stability a property of reducing carbon monoxide in a shifter, and supply hydrogen in a stable manner.

Further, according to the present invention, since a purifying part includes heating means and controls the means on starting of the device, a temperature of a purifying part can be immediately increased to a temperature for activating a purifying catalyst, thereby shortening time required for obtain stable supply of hydrogen.

Also , it is possible to prevent water vapor in hydrogen gas from condensing in the purifying part, the carried catalyst is not exfoliated even in the case of frequent starting and stopping, and the catalytic activity can be maintained. Thus, it is possible to provide a hydrogen generating apparatus which can positively reduce carbon monoxide with stability for a long time.

Further, a catalyst temperature of the purifying part is controlled by using the heating means and cooling means in combination. Hence, it is possible to respond to rapid change in temperature due to reaction conditions of the purifying part that include variations in load, thereby controlling the catalyst at an optimum temperature. As a result, it is possible to provide a hydrogen generating apparatus which can positively reduce carbon monoxide with stability regardless, of variations in load.

Furthermore, since an electric heater is used as heating means, without the necessity for a complicated configuration such as piping, it is possible to quickly respond to a temperature lowered in the purifying part due to changes in reaction conditions such as variations in load.

Moreover, since a PTC heater is used as heating means, without the necessity for a temperature detection part, it is possible to quickly respond to a temperature lowered in the purifying part due to changes in reaction conditions such as variations in load.

Also, according to the present invention, in a hydrogen generating apparatus which conducts water vapor reforming on a hydrocarbon component and supplies hydrogen, it is possible to provide a hydrogen generating apparatus which can keep track of a reduction in concentration of carbon monoxide in a hydrogen generating part by providing reference values of a concentration of carbon monoxide after passage through the shifter or passage through the purifying part and a purifying temperature of the purify catalyst body to measure changes in the concentrations and temperatures. Particularly on starting, it is possible to suitably judge a starting state relative to a reduction in concentration of carbon monoxide and supply hydrogen gas having a low concentration of carbon monoxide in a stable manner.

## Claims

1. A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means,
said supply amount control means conducts control such that said supply amount of said rawmaterial is reduced in said hydrogen gas supply part,
amounts of said supplied raw material and water are reduced in said hydrogen gas supply part, or
said supply amount of said water is increased in said hydrogen gas supply part.

2. A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
carbon monoxide concentration detection means which receives supply of gas being subjected to said shift conversion from said shifter, and detects a concentration of carbon monoxide in gas being subjected to said shift, and
supply amount control means of controlling said supply amount of said raw material and/or said water for said hydrogen gas supply part,
wherein when said concentration of carbon monoxide exceeds a predetermined value, said concentration being detected by said carbon monoxide concentration detection means, and when a temperature of said shift catalyst body is within a predetermined value range, said temperature being detected by said temperature detection means,
said supply amount control means conducts control such that a supply amount of said raw material is reduced in said hydrogen gas supply part,
amounts of said supplied raw material and water are reduced in said hydrogen gas supply part, or
said supply amount of said water is increased in said hydrogen gas supply part.

3. A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer, and
carbon monoxide concentration detection means which receives supply of gas being subjected to said shift conversion from said shifter, and detects a concentration of carbon monoxide in gas being subjected to said shift conversion,
wherein when a concentration of carbon monoxide exceeds a predetermined value, said concentration being detected by said carbon monoxide concentration detection means, and when said temperature detected by said temperature detection means is outside a predetermined value range,
said temperature adjustment means controls a temperature of said gas.

4. A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means, and when said temperature detected by said temperature detection means is outside a predetermined value range,
said temperature adjustment means controls said temperature of said gas,
when said concentration of carbon monoxide exceeds a predetermined value, said concentration being detected by said carbon monoxide concentration detection means, and when said temperature of said shift catalyst body is within a predetermined value range, said temperature being detected by said temperature detection means,
said supply amount control means conducts control such that said supply amount of said raw material is reduced in said hydrogen gas supply part,
amounts of said supplied raw material and water are reduced in said hydrogen gas supply part, or
said supply amount of said water is increased in said hydrogen gas supply part.

5. The hydrogen gas generating device according to claim 3 or 4, wherein when said concentration of carbon monoxide exceeds a predetermined value, said concentration being detected by said carbon monoxide concentration detection means, and when said temperature of said shift catalyst body is below a predetermined value range, said temperature being detected by said temperature detection means,
said temperature adjustment means increases a temperature of said gas.

6. The hydrogen gas generating device according to claim 3 or 4, wherein when said concentration of carbon monoxide exceeds a predetermined value, said concentration being detected by said carbon monoxide concentration detection means, and when said temperature of said shift catalyst body is higher than a predetermined value range, said temperature being detected by said temperature detection means,
said temperature adjustment means reduces said temperature of said gas.

7. A hydrogen generating apparatus comprising a gas supply part for supplying hydrogen gas containing at least hydrogen and carbon monoxide,
a purifying part having a purify catalyst body for causing said carbon monoxide to react, and
heating means of heating hydrogen gas supplied to said purifying part and/or said purifying part.

8. The hydrogen generating apparatus according to claim 7, further comprising a temperature detection part provided on said purifying part, and
control means of controlling at least said heating means,
wherein said control means conducts control such that said heating means is operated on starting of said apparatus and a temperature detected by said temperature detection part is set at a predetermined temperature or higher.

9. The hydrogen generating apparatus according to claim 8, further comprising cooling means of cooling hydrogen gas supplied to said purifying part and/or said purifying part,
wherein said control means controls said heating means and said cooling means such that said temperature detected by said temperature detection part is within a predetermined temperature range after starting of said apparatus.

10. The hydrogen generating apparatus according to claim 7, wherein a PTC heater is used as said heating means.

11. A hydrogen generating apparatus comprising a hydrogen gas supply part which receives supply of a raw material and water and generates hydrogen gas containing at least carbon monoxide and water vapor,
a shifter which receives supply of hydrogen gas from said hydrogen gas supply part and has a shift catalyst body,
a purifying part which receives supply of said hydrogen gas from said shifter and has a purify catalyst body,
a purifying temperature detection part for detecting a temperature of said purify catalyst body,
carbon monoxide concentration detection means of detecting a concentration of said carbon monoxide in said shifter and/or said purifying part, and
control means of controlling a supply amount of hydrogen gas from said purifying part,
wherein on starting, when said concentration of carbon monoxide is lower than a predetermined value on starting, said concentration being detected by said carbon monoxide concentration detection means, and when a temperature detected by said purifying temperature detection means is higher than a predetermined value,
said control means starts supply of hydrogen gas from said purifying part.

12. The hydrogen generating apparatus according to claim 11, wherein said purifying temperature detection part detects a gas temperature after leaving said purify catalyst body as a temperature of said purify catalyst body.

13. A fuel cell apparatus comprising a hydrogen generating apparatus according to any one of claims 1 to 12, and
a fuel cell power generating part which is operated by receiving supply of hydrogen gas from said hydrogen generating apparatus.

14. A program for causing a computer to function as the whole or a part of supply amount control means of controlling said supply amount of said supplied raw material and/or water for said hydrogen gas supply part in a hydrogen generating apparatus according to claim 1.

15. A program for causing a computer to function as the whole or a part of supply amount control means of controlling said supply amount of said raw material and/or water for said hydrogen gas supply part in a hydrogen generating apparatus according to claim 2.

16. A program for causing a computer to function as the whole or a part of temperature adjustment means of adjusting said temperature of hydrogen gas supplied to said shifter from said reformer in a hydrogen generating apparatus according to claim 3.

17. A program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to claim 4.

18. A program for causing a computer to function as the whole or a part of control means of controlling at least said heating means in a hydrogen generating apparatus according to claim 8.

19. A program for causing a computer to function as the whole or a part of control means of controlling said amount of hydrogen gas supplied from said purifying part in a hydrogen generating apparatus according to claim 11.

20. Amedium for carrying a program for causing a computer to function as the whole or a part of supply amount control means of controlling said supply amount of said raw material and/or water for said hydrogen gas supply part in a hydrogen generating apparatus according to claim 1, said medium being processed by said computer.

21. Amedium for carrying a program for causing a computer to function as the whole or a part of supply amount control means of controlling said supply amount of said raw material and/or said water for said hydrogen gas supply part in a hydrogen generating apparatus according to claim 2, said medium being processed by said computer.

22. A medium for carrying a program for causing a computer to function as the whole or a part of temperature adjustment means of adjusting said temperature of hydrogen gas supplied to said shifter from said reformer in a hydrogen generating apparatus according to claim 3, said medium being processed by said computer.

23. Amedium for carrying a program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to claim 4, said medium being processed by said computer.

24. Amedium for carrying a program for causing a computer to function as the whole or a part of control means of controlling at least said heating means in a hydrogen generating apparatus according to claim 8, said medium being processed by said computer.

25. Amedium for carrying a program for causing a computer to function as the whole or a part of control means of controlling an amount of hydrogen gas supplied from said purifying part in a hydrogen generating apparatus according to claim 11, said medium being processed by said computer.

## Amended claims

### Amended claims under Art. 19.1 PCT

**1.** A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means,
said supply amount control means conducts control such that said supply amount of said raw material is reduced in said hydrogen gas supply part,
amounts of said supplied raw material and water are reduced in said hydrogen gas supply part, or
said supply amount of said water is increased in said hydrogen gas supply part.

**2.** A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
carbon monoxide concentration detection means which receives supply of gas being subjected to said shift conversion from said shifter, and detects a concentration of carbon monoxide in gas being subjected to said shift, and
supply amount control means of controlling said supply amount of said raw material and/or said water for said hydrogen gas supply part,
wherein when said concentration of carbon monoxide exceeds a predetermined value, said concentration being detected by said carbon monoxide concentration detection means, and when a temperature of said shift catalyst body is within a predetermined value range, said temperature being detected by said temperature detection means,
said supply amount control means conducts control such that a supply amount of said raw material is reduced in said hydrogen gas supply part,
amounts of said supplied raw material and water are reduced in said hydrogen gas supply part, or
said supply amount of said water is increased in said hydrogen gas supply part.

**3.** A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer, and
carbon monoxide concentration detection means which receives supply of gas being subjected to said shift conversion from said shifter, and detects a concentration of carbon monoxide in gas being subjected to said shift conversion,
wherein when a concentration of carbon monoxide exceeds a predetermined value, said concentration being detected by said carbon monoxide concentration detection means, and when said temperature detected by said temperature detection means is outside a predetermined value range,
said temperature adjustment means controls a temperature of said gas.

**4.** A hydrogen generating apparatus comprising a hydrogen gas supply part which receives supply of a raw material and water and generates hydrogen gas containing at least carbon monoxide and water vapor,
a shifter which has a shift catalyst body, receives supply of hydrogen gas from said hydrogen gas supply part, and conducts shift conversion on said hydrogen gas,
temperature detection means of detecting a temperature of said shift catalyst body,
temperature adjustment means of adjusting a temperature of hydrogen gas supplied to said shifter from said reformer,
carbon monoxide concentration detection means which receives supply of gas being subjected to said shift conversion from said shifter, and detects a concentration of carbon monoxide in gas being subjected to said shift conversion, and
supply amount control means of controlling a supply amount of said raw material and/or said water for said hydrogen gas supply part,
wherein when said concentration of carbon monoxide exceeds a predetermined value, said concentration being detected by said carbon monoxide concentration detection means, and when said temperature detected by said temperature detection means is outside a predetermined value range,
said temperature adjustment means controls said temperature of said gas,
when said concentration of carbon monoxide exceeds a predetermined value, said concentration being detected by said carbon monoxide concentration detection means, and when said temperature of said shift catalyst body is within a predetermined value range, said temperature being detected by said temperature detection means,
said supply amount control means conducts control such that said supply amount of said raw material is reduced in said hydrogen gas supply part,
amounts of said supplied raw material and water are reduced in said hydrogen gas supply part, or
said supply amount of said water is increased in said hydrogen gas supply part.

**5.** The hydrogen gas generating device according to claim 3 or 4, wherein when said concentration of carbon monoxide exceeds a predetermined value, said concentration being detected by said carbon monoxide concentration detection means, and when said temperature of said shift catalyst body is below a predetermined value range, said temperature being detected by said temperature detection means,
said temperature adjustment means increases a temperature of said gas.

**6.** The hydrogen gas generating device according to claim 3 or 4, wherein when said concentration of carbon monoxide exceeds a predetermined value, said concentration being detected by said carbon monoxide concentration detection means, and when said temperature of said shift catalyst body is higher than a predetermined value range, said temperature being detected by said temperature detection means,
said temperature adjustment means reduces said temperature of said gas.

**7.** (Cancelled)

**8.** (Cancelled)

**9.** (Cancelled)

**10.** (Cancelled)

**11.** (Cancelled)

**12.** (Cancelled)

**13.** (Amended) A fuel cell apparatus comprising a hydrogen generating apparatus according to any one of claims 1 to 4, and
a fuel cell power generating part which is operated by receiving supply of hydrogen gas from said hydrogen generating apparatus.

**14.** A program for causing a computer to function as the whole or a part of supply amount control means of controlling said supply amount of said supplied raw material and/or water for said hydrogen gas supply part in a hydrogen generating apparatus according to claim 1.

**15.** A program for causing a computer to function as the whole or a part of supply amount control means of controlling said supply amount of said raw material and/or water for said hydrogen gas supply part in a hydrogen generating apparatus according to claim 2.

**16.** A program for causing a computer to function as the whole or a part of temperature adjustment means of adjusting said temperature of hydrogen gas supplied to said shifter from said reformer in a hydrogen generating apparatus according to claim 3.

**17.** A program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to claim 4.

**18.** (Cancelled)

**19.** (Cancelled)

**20.** A medium for carrying a program for causing a computer to function as the whole or a part of supply amount control means of controlling said supply amount of said raw material and/or water for said hydrogen gas supply part in a hydrogen generating apparatus according to claim 1, said medium being processed by said computer.

**21.** Amedium for carrying a program for causing a computer to function as the whole or a part of supply amount control means of controlling said supply amount of said raw material and/or said water for said hydrogen gas supply part in a hydrogen generating apparatus according to claim 2, said medium being processed by said computer.

**22.** Amedium for carrying a program for causing a computer to function as the whole or a part of temperature adjustment means of adjusting said temperature of hydrogen gas supplied to said shifter from said reformer in a hydrogen generating apparatus according to claim 3, said medium being processed by said computer.

**23.** A medium for carrying a program for causing a computer to function as the whole or a part of supply amount control means of controlling said supply amount of said raw material and/or water for said hydrogen gas supply part, and temperature adjustment means of adjusting said temperature of hydrogen gas supplied to said shifter from said reformer in a hydrogen generating apparatus according to claim 4, said medium being processed by said computer.

**24.** (Cancelled)

**25.** (Cancelled)
